# EUROPEAN PATENT APPLICATION

(11) **EP 4 796 416 A1**
(43) Date of publication of application: **26.08.2026**
(21) Application number: 26159726.4
(22) Date of filing: 20.02.2026
(51) Int. Cl.: B62D 7/18, B62D 13/02, B62D 13/04

(54) **STEERING KNUCKLE OF COMPACT AXLES FOR AUTONOMOUS VEHICLE APPLICATION**

(30) Priority: 21.02.2025 US 202519060438
(71) Applicant: Dana Italia S.r.L., 38062 Arco (IT)
(72) Inventor: BAVARESCO, Federico, 38062 Arco (TN) (IT); VELLERE, Giulio, 38062 Arco (TN) (IT); DENEI, Fabrizio, 38062 Arco (TN) (IT)
(74) Representative: Pfenning, Meinig & Partner mbB

(57) **Abstract**

An axle assembly (112) for a vehicle comprising: a steering cylinder; a housing (142); a steering knuckle (146, 148), the steering knuckle (146, 148) having a first extension and a second extension; a first tie rod assembly (156) connectable to the steering cylinder and pivotally coupled to the first extension; and a second tie rod assembly (158) connectable to a draw bar (422) of the vehicle and pivotally coupled to the second extension. The steering knuckle (146, 148) comprising: a core, the core including a first hole, the first hole extends along a first axis through the core; the first extension, the first extension extending away from the core and connected to a first side of the core; and the second extension, the second extension extending away from the core and connected to a second side of the core; where the first side is opposite to the second side, and the first hole houses a kingpin that is fit thereto.

## Description

### TECHNICAL FIELD

The present description relates to an axle assembly for a vehicle, having a knuckle with a first arm and a second arm extending from opposite sides, where an arm is coupled to a drive bar via a tie rod, allowing steering of the axle assembly via the draw bar.

### BACKGROUND AND SUMMARY

Vehicles, such as autonomous vehicles (e.g., operated without human input), may have an axle assembly with a steering system used to steer wheel hubs and by extension wheels of a vehicle. The axle assembly may have at least a first steering knuckle and a second steering knuckle, where the steering knuckles are coupled such as to turn the wheel hubs during steering.

However autonomous vehicles or remote controlled vehicles may be restricted from driving on some highways or roadways. An autonomous vehicle may therein be transported by another vehicle. For an example, the autonomous vehicle may be towed (e.g., via a human operated vehicle) after being coupled via a trailing assembly, allowing the human operated vehicle to steer the autonomous vehicle therein. A tie rod assembly may be couple to the steering assembly via a joint. For example, the tie rod assembly may pivotally couple to a draw bar. Likewise, the tie rod assembly may pivotally couple to a steering knuckle of the axle assembly. A turning maneuver of steering assembly, such as turning of the steering assembly via a human operated vehicle, may pivot and shift the tie rod assembly, and the tie rod assembly may pivot and turn the steering knuckle when pivotally coupled. The tie rod assembly may pivotally couple to the steering knuckle via a support. However, the support may add complexity to the number of parts and manufacturing. Further, to perform maintenance on the axle, such as disconnecting the third tie rod assembly, kingpins and other components coupling the at least a knuckle, a housing of the axle assembly, and a wheel hub assembly may be removed.

The inventors herein have recognized these and other issues with such systems and have developed a way to at least partially address them. As developed in one example, an axle assembly for a vehicle may comprise: a steering cylinder; a housing; a steering knuckle, the steering knuckle having a first extension and a second extension; a first tie rod assembly connectable to the steering cylinder and pivotally coupled to the first extension; and a second tie rod assembly connectable to a draw bar of the vehicle and pivotally coupled to the second extension.

In another example, a steering knuckle may comprise: a core, the core including a first hole, the first hole extends along a first axis through the core; the first extension, the first extension extending away from the core and connected to a first side of the core; and the second extension, the second extension extending away from the core and connected to a second side of the core; where the first side is opposite to the second side, the first extension is pivotally coupleable to a first tie rod assembly connected to a steering cylinder, the second extension is pivotally coupleable to a second tie rod assembly pivotally coupled to a trailing assembly of a vehicle, and the first hole houses a kingpin that is fit thereto.

The first extension of the steering knuckle may be an upper extension, such as an upper arm or another upper component acting as a lever, that pivotally couples to the first tie rod assembly to the steering knuckle. Likewise, the second extension of the steering knuckle may be a lower extension, such as a lower arm or another lower component acting as a lever, that pivotally couples to the second tie rod assembly steering knuckle. The steering knuckle may therein be steered through a maneuver where the second extension is pivoted by pivoting and the second tie rod assembly and/or the turning of draw bar. Further, the pivoting of the knuckle may translate and pivot the first tie rod arm. More specifically, the maneuver further pivots the first extension, therein pulling or pushing the first tie rod assembly to pivot and translate. The pivoting and translation of the first tie rod assembly may move the steering cylinder, therein pivoting and turning the other steering knuckle on the opposite side of the axle assembly. The steering knuckle and the other steering knuckle may turn in the common direction, and further turn the wheels of the axle assembly with a human operated vehicle towing the vehicle housing the axle assembly.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE FIGURES

FIG. 1 shows an example schematic of a vehicle including an axle assembly with one or more of a steering knuckle of the present disclosure.
FIG. 2 shows an example schematic of the first vehicle and a second vehicle connected to tow the first vehicle via a trailing assembly.
FIG. 3 shows a perspective view of an axle assembly with a steering knuckle of the present disclosure.
FIG. 4 shows a perspective view of axle assembly coupled to a trailing assembly via a draw bar and a tie rod arm.
FIG. 5 shows a side view of the steering knuckle.
FIG. 6 shows a flow diagram of a method of assembling an axle assembly of the present disclosure.

### DETAILED DESCRIPTION

The following description relates to a steering knuckle for an axle assembly, where the axle assembly is a steering axle assembly including a steering axle. The steering knuckle may be referred to herein as a first steering knuckle. The first steering knuckle has a first extension and a second extension, where the first and second extensions are on opposite sides of the steering knuckle. The first extension and the second extension may be a first arm and a second arm, respectfully, and may be levers each of which may pivotally couple to a singular tie rod or a tie rod assembly comprising a plurality of tie rod arm. A first tie rod or a first tie rod assembly may pivotally to the first extension and be connected to a steering cylinder or another steering device. Likewise, a second tie rod or a second tie rod assembly may pivotally couple to the second extension and pivotally couple to one or more features or components of a trailing assembly, such as a draw bar. The axle assembly, tie rod(s) and/or tie rod assembly(ies), and one or more components or features of the trailing assembly may be part of a first vehicle.

The steering cylinder or other steering device may couple or connect to a third draw tie rod or third tie rod assembly. The third tie rod or third tie rod assembly may pivotally couple a second steering knuckle. More specifically, the third tie rod or third tie rod assembly may pivotally couple a third extension extending outward from the third steering knuckle. The third extension may be an arm or another appendage that may be a lever for the third steering knuckle. The steering cylinder or other steering device couples the first tie rod or first tie rod assembly and the third tie rod or third tie rod assembly such that that the coupled tie rods or tie rod assemblies may be translated via the same maneuver. Said in another way, translating of the first tie rod or first tie rod assembly in a direction may translate the third tie rod or third tie rod assembly in the same direction. The first steering knuckle and the second steering knuckle may be pivoted in approximately the same direction via turning from the second tie rod or tie rod assembly. Further a first wheel hub, the second wheel hub, and the wheels attached therein may be turned in the approximately the same direction.

When connected or coupled to a draw bar or another component of the steering assembly, the second tie rod or tie rod assembly turns the first steering knuckle with the steering assembly. The steering assembly, the second tie rod or tie rod assembly, and the first steering knuckle may therein facilitate the wheels of the first vehicle to turn with a second vehicle, the second vehicle towing the first vehicle via the trailing assembly.

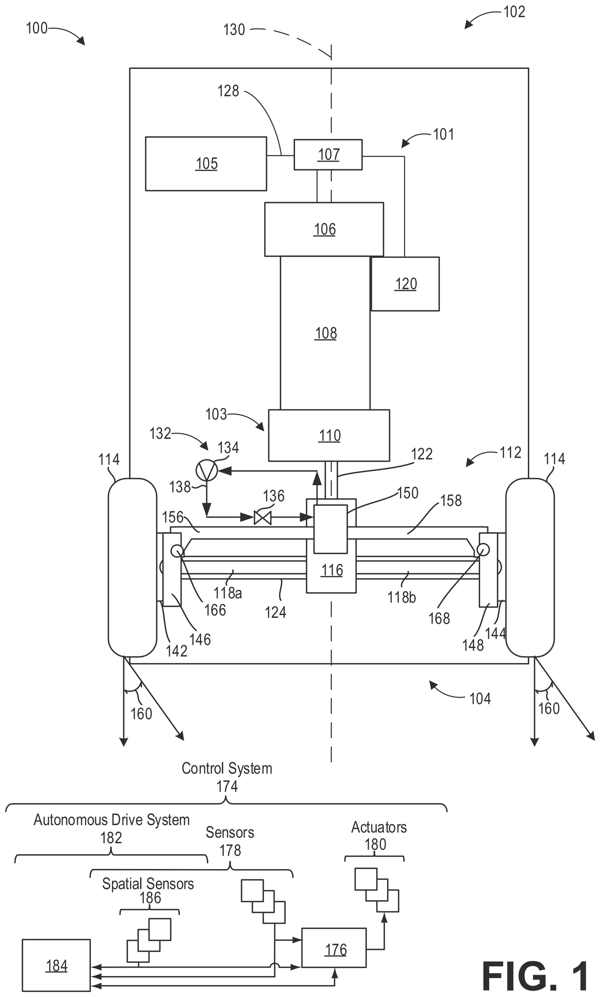

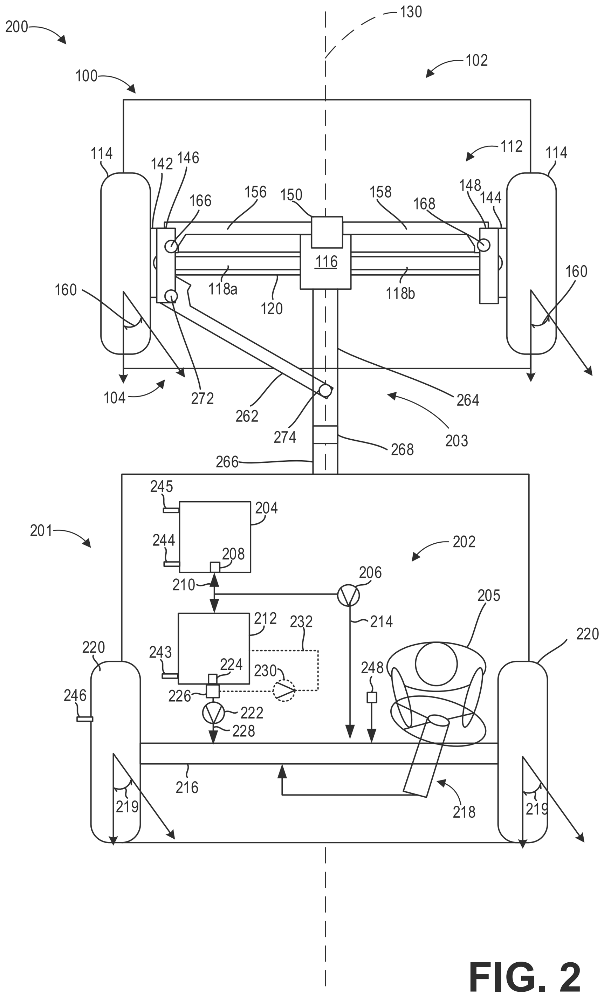

FIG. 1 shows an example schematic of a vehicle including an axle assembly with one or more of a steering knuckle of the present disclosure. FIG. 2 shows an example schematic of the first vehicle and a second vehicle connected to tow the first vehicle via a trailing assembly. The second vehicle may tow the first vehicle, and steer the steering knuckle and wheels of the axle assembly via a tie rod arm coupled to the steering knuckle and the trailing assembly.

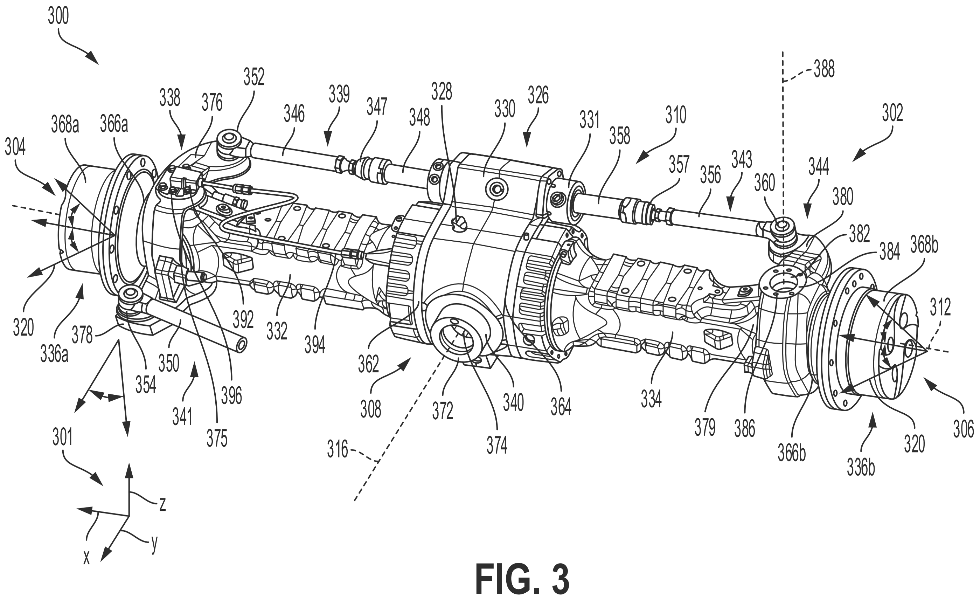

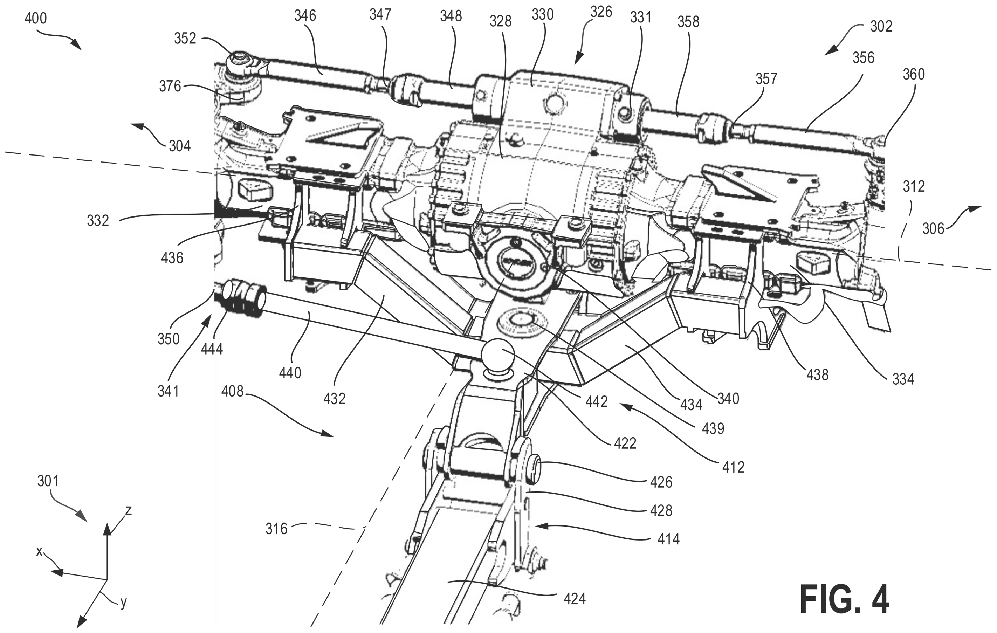

FIG. 3 shows a perspective view of an axle assembly with a steering knuckle of the present disclosure. The axle assembly is a steering axle that includes at least a steering knuckle of the present disclosure that may be referred to herein as a first steering knuckle. The axle assembly may have another steering knuckle referred to herein as a second steering knuckle. The first steering knuckle has a first extension and a second extension pivotally coupled to a first tie rod assembly and a second tie rod assembly, respectively. The second steering knuckle has a third extension pivotally coupled to a third tie rod assembly. The first tie rod assembly and the second tie rod assembly are each connected to and coupled together via a steering cylinder. FIG. 4 shows a perspective view of axle assembly coupled to a trailing assembly via a draw bar and a portion of the third tie rod assembly including a tie rod arm. The tie rod arm of the third tie rod assembly pivotally couples to the draw bar, and therein pivotally couples the trailing assembly to the third tie rod assembly and the second extension. FIGS. 2-4 are used to describe a method of steering the first steering knuckle and therein the second steering knuckle and wheel hubs of the axle assembly via the trailing assembly and the third tie rod assembly.

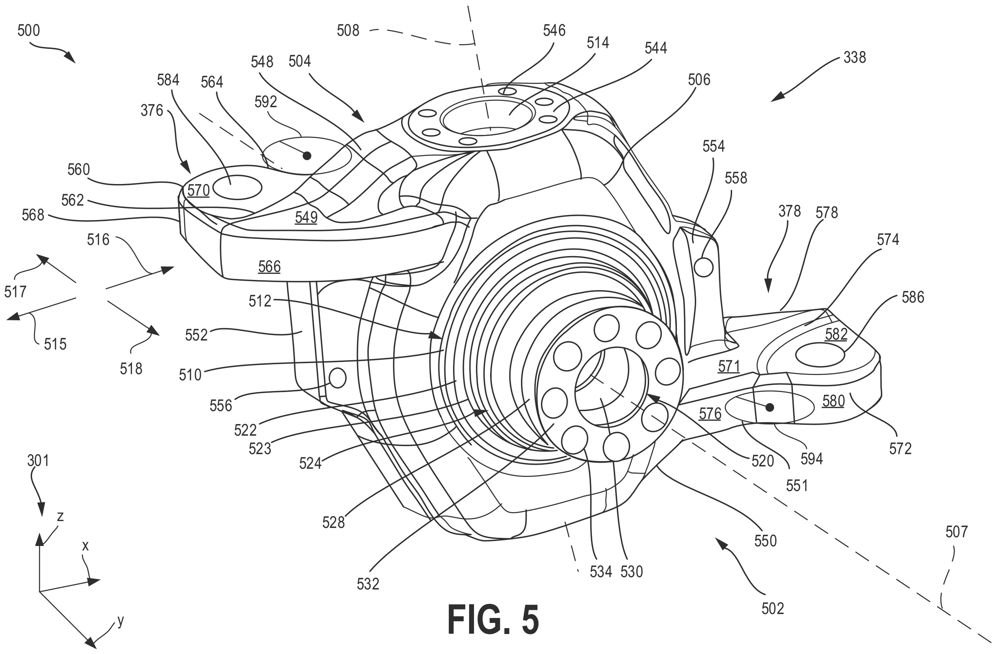

FIG. 5 shows a side view of the first steering knuckle. FIG. 5 shows the first steering knuckle separated from other features and components of the axle assembly. FIG. 5 shows a plurality of features including ribs connecting to and supporting first extension and the second extension, the shape of a core of the knuckle, a first hole to house a support assembly for a wheel hub assembly, and a second hole to house a kingpin.

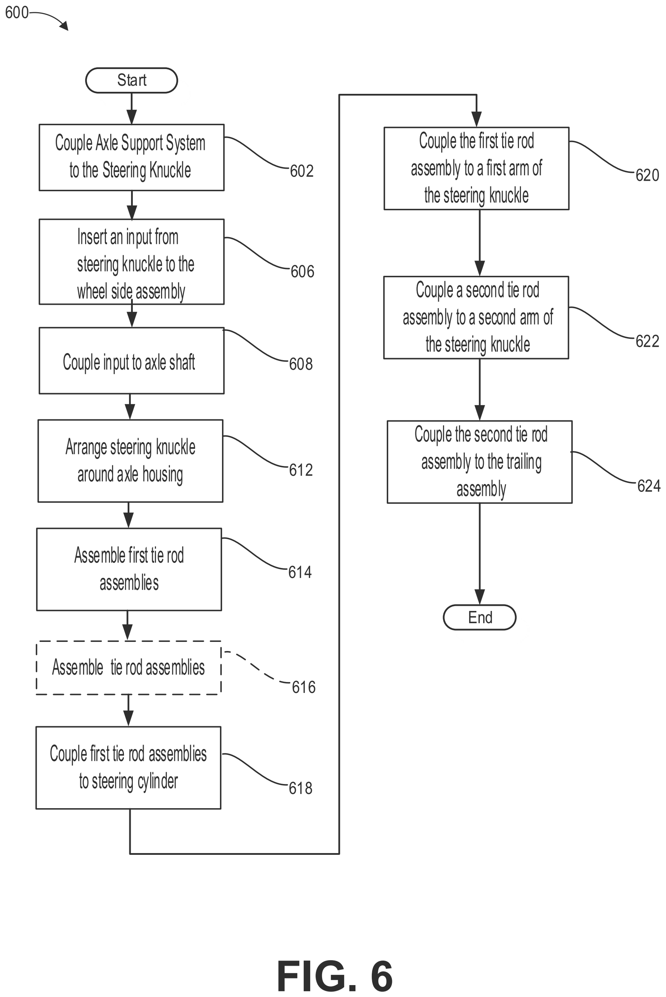

FIG. 6 shows a flow diagram of a method of assembling an axle assembly. More specifically assembling the first steering knuckle to the axle assembly via a kingpin, the first tie rod assembly and the second tie rod assembly to the first steering knuckle, and the second tie rod assembly to the draw bar and the trailing assembly.

It is also to be understood that the specific assemblies and systems illustrated in the attached drawings, and described in the following specification are exemplary embodiments of the inventive concepts defined herein. For purposes of discussion, the drawings are described collectively. Thus, like elements may be commonly referred to herein with like reference numerals and may not be re-introduced.

FIGS. 1-2 shows a schematic of an example configuration with relative positioning of the various components. FIGS. 3-5 show example configurations with approximate positioning. FIGS. 3-5 are shown approximately to scale; though other relative dimensions may be used. As used herein, the terms "approximately" is construed to mean plus or minus five percent of the range unless otherwise specified.

Further, FIGS. 1-5 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of the element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example. Moreover, the components may be described as they relate to reference axes included in the drawings.

Features described as axial may be approximately parallel with an axis referenced unless otherwise specified. Features described as counter-axial may be approximately perpendicular to the axis referenced unless otherwise specified. Features described as radial may be circumferentially around or extend in a radially outward from an axis, such as the axis referenced, or a component or feature described prior as being radial to a referenced axis, unless otherwise specified.

Features described as longitudinal may be approximately parallel with an axis that is longitudinal. A lateral axis may be normal to a longitudinal axis and a vertical axis. Features described as lateral may be approximately parallel with the lateral axis. A vertical axis may be normal to a lateral axis and a longitudinal axis. Features described as vertical may be approximately parallel with a vertical axis.

Turning now to FIG. 1, a vehicle 100 is shown comprising a powertrain 101 and a drivetrain 103. The vehicle 100 may have a front end 102 and a rear end 104, located on opposite sides of vehicle 100. Objects, components, and features of the vehicle 100 referred to as being located near the front may be closest to the front end 102 compared to the rear end 104. Objects, components, and features of the vehicle 100 referred to as being located near the rear may be closest to the rear end 104 compared to the front end 102. The vehicle 100 may have a longitudinal axis 130. The powertrain 101 and drivetrain 103 may have a length parallel with the longitudinal axis 130.

The vehicle 100 may be a commercial vehicle, light, medium, or heavy duty vehicle. Further, the vehicle 100 may be an off-highway vehicle, such as an agricultural vehicle. For an example embodiment, the vehicle 100 may be a wheeled vehicle, such as an automobile. Additionally or alternatively, the vehicle 100 may be a plane, a boat, or other vehicle system that utilizes the axle assembly 112. Additionally or alternatively, the vehicle 100 and/or one or more of its components, such as components of the powertrain 101 and/or drivetrain 103, may be used in industrial, locomotive, military, agricultural, and/or aerospace applications. For an example, the vehicle 100 is an all-electric vehicle or a vehicle with all-electric modes of operation, such as a plug-in hybrid vehicle. For another example, the vehicle may be a combustion vehicle. The vehicle 100 may be an autonomous vehicle such as a self-driving vehicle (SDV) capable driving absent of a human operator inputting real-time commands. The vehicle 100 may therein be able to navigate an environment, turn and maneuver to avoid obstacles, increase or decrease speed by increasing or reducing rotary from a mover to wheels and/or via braking absent a human driving the vehicle via input devices integrated via the vehicle 100 or remotely via inputs communicatively coupled wirelessly to the vehicle 100. As an autonomous vehicle, the vehicle 100 may be driven via set of stored via an autonomous drive system 182 of a control system 174.

The powertrain 101 comprises a prime mover 106 and a transmission 108. The prime mover 106 may be an internal combustion engine (ICE) or an electric machine, such as an electric motor or electric motor/generator, for example. The prime mover 106 is operated to provide rotary power to an axle assembly 112, such as to drive and rotate a plurality of wheels 114 of the axle assembly 112 via the rotational power. The prime mover 106 is operated to provide rotary power to the transmission 108 and there may be at least an input from the prime mover 106 to the transmission 108.

There may be other movers housed by the vehicle 100 and integrated into the powertrain 101 to provide torque besides the prime mover 106. For example, of vehicle 100 where the prime mover 106 is an ICE, the vehicle 100 may be a hybrid vehicle, where the transmission 108 has multiple inputs for rotational power and sources of torque from movers. For examples where the vehicle 100 is a hybrid vehicle, an electric machine 120 may electrify and be a source of rotational energy to drive the vehicle 100. The electric machine 120 may have an input to the transmission 108 or another means of providing rotational power to an axle assembly.

The prime mover 106 may be powered via energy from an energy storage device 105. In one example, the energy storage device 105 is a battery, such as a traction battery, configured to store electrical energy. Likewise, the electric machine 120 may be powered via energy from the energy storage device 105. An inverter 107 may be arranged between the energy storage device 105 and the prime mover 106 and/or the electric machine 120, where the inverter 107 is configured to adjust direct current (DC) to alternating current (AC). The inverter 107 may include a variety of components and circuitry with thermal demands that effect an efficiency of the inverter. Electrical or electrified components, such as the energy storage device 105, prime mover 106, the electric machine 120, and/or the inverter 107 may be electrically coupled via one or more electrical lines 128. It is to be appreciated that the prime mover 106 and/or other movers of the vehicle 100 may be powered via non electrified power sources. For example, a power source may include a reservoir storing a chemical fuel to be delivered to and reacted via the prime mover 106 or another mover of the vehicle 100, such as a reservoir of gasoline, diesel, another fluid fossil fuel, or a biofuel to be delivered and reacted via an ICE.

It is to be appreciated, that for another example of vehicle 100, there may be one or more transmissions that may not output to a drive shaft, such as driveshaft 122. For example, one or more of the transmissions may output directly to an axle shaft and/or a wheel, such as an axle shaft of the axle assembly 112 and/or a wheel of wheels 114. Transmissions of this example may be referred to herein as wheel side transmissions. A mover may output torque to the wheel side transmission, where rotary power flows from the mover to the transmission.

The transmission 108 may be any type of transmission, such as a manual transmission, an automatic transmission, or a continuously variable transmission. Additionally, the transmission 108 may be a gearbox or include a gearbox. Alternatively, the transmission 108 may be an axle transmission or a trans axle transmission. The transmission 108 may physically couple to an axle of the vehicle, such as via mounting. In some embodiments, additionally or alternatively, the transmission 108 may be a first transmission, and the vehicle 100 may have a second transmission. A second transmission or additional transmissions may be arranged to physically couple an axle of the vehicle 100, such as the axle of the axle assembly 112. Additionally, the second transmission may be drivingly coupled and output torque to the axle assembly 112. Additionally or alternatively, a second transmission or another transmission may be arranged to drivingly couple and output torque to another axle besides the axle of the axle assembly 112.

The transmission 108 may receive the rotary power produced by the prime mover 106 and/or other movers, such as the electric machine 120, as an input via one or more rotational elements, such as via shafts. Likewise, the transmission 108 may output rotary power to the drivetrain 103 in accordance with a selected gear or setting via one or more rotational elements, such as a shaft(s). For example, the transmission 108 may output rotational power via a driveshaft 122 to an axle assembly (e.g., a drive axle assembly with a drive axle) and a plurality of wheel hub assemblies and wheels rotably coupled thereto. For another example the transmission may output rotational power directly to one or more wheels, such as if the transmission is a wheel side transmission, such as a wheel hub transmission. For the other example, there may be a mover drivingly coupled via a rotational element, such as a shaft, to each wheel hub of a driven wheel and/or a transmission, and/or a transmission drivingly coupled each wheel hub of a driven wheel. For these or other examples, if may be single or plurality of second movers in addition to the prime mover 106, the vehicle 100 may be a hybrid vehicle, wherein there are multiple torque inputs to the transmission 108.

The powertrain 101 and the drivetrain 103 include at least the axle assembly 112. The axle assembly 112 is a steering axle assembly that includes steering axle. Likewise, the axle assembly 112 may be configured to drive a set of wheels 114. In an example, the axle assembly 112 is arranged near the rear of the vehicle 100 and thereby comprises a rear axle. In another example, the axle assembly 112 is arranged near a front of the vehicle 100 and thereby comprises a front axle. Further, the drivetrain 103 may include one or more tandem axle assemblies. As such, the drivetrain 103 may have other configurations without departing from the scope of this disclosure, and the configuration shown in FIG. 1 is provided for illustration, not limitation. Further, the vehicle 100 may include additional wheels that are not coupled to the drivetrain 103.

In addition to being a steering axle assembly, the axle assembly 112 may be a drive axle assembly that may be driven such as receive rotational energy and power from one or more movers, such as the prime mover 106 and/or electric machine 120. The rotational power driving the axle assembly 112 may drive the wheels 114.

In some configurations, such as shown in FIG. 1, the drivetrain 103 includes a transfer case 110 configured to receive rotary power output by the transmission 108. A driveshaft 122 transmits the rotary power from transmission 108 and/or the transfer case 110 to a differential 116 of the axle assembly 112 to drive the wheels 114. For example, the differential 116 may be drivingly coupled to a first set of axle shafts, including a first axle shaft 118a and a second axle shaft 118b, coupled to wheels 114. More specifically, the first axle shaft 118a is coupled to at least a wheel of the wheels 114 to drive the wheel, and the second axle shaft 118b is coupled to at least another wheel of the wheels 114 to drive the other wheel. The wheel and the other wheel of the wheels 114 are on opposite sides of the axle assembly 112. The driveshaft 122 may be positioned to extend in parallel with the longitudinal axis 130. For an example of vehicle 100, the driveshaft 122 may be centered about the longitudinal axis 130.

The shafts 118a, 118b may drivingly couple to the set of wheels 114 via a set of wheel end assemblies. For example, the set of wheel end assemblies may include a first wheel end assembly and a second wheel end assembly. The first wheel end assembly may drivingly couple to one or more wheels of the set of wheels 114. Likewise, the second wheel end assembly may drivingly couple to one or more wheels of the set of wheels 114. Wheels drivingly coupled to the first wheel end assembly may be opposite the axle assembly 112 from the wheels drivingly coupled to the second wheel end assembly. The first axle shaft 118a may drivingly couple to the first wheel end assembly. The second axle shaft 118b may drivingly couple to the second wheel end assembly. Torque output by the differential 116 to the first axle shaft 118a may drive one or more components of the first wheel end assembly and one or more wheels of the wheels 114 coupled to the first wheel end assembly. Torque output by the differential 116 to the second axle shaft 118b may drive one or more components of the second wheel end assembly and one or more wheels of the wheels 114 coupled to the second wheel end assembly.

The first wheel end assembly includes a first hub assembly 142, a first steering knuckle 146, and a first tie rod assembly 156. The second wheel end assembly includes a second hub assembly 144, a second steering knuckle 148, and a second tie rod assembly 158. The first and second wheel hub assemblies 142, 144 are wheel hub assemblies including wheel hubs that may rigidly couple to the wheels 114. The first tie rod assembly 156 and the second tie rod assembly 158 may be connected to a steering device 150. The steering device 150 may be a steering cylinder or another form of hydraulic steering device. The steering device 150 may rigidly couple to a component of the vehicle 100 that remains stationary when the vehicle is in motion. The steering device 150 may rigidly couple to a housing of the axle assembly 112, such as an axle housing 124. More specifically, the steering device 150 may rigidly couple to the differential 116.

The first tie rod assembly 156, the second tie rod assembly 158, and the steering device 150 are part of a larger steering system for the vehicle 100. The steering system of the vehicle 100 may be a hydraulic steering system, including at least a hydraulic circuit 132 fluidically coupled to the steering device 150. The steering system may include a hydraulic steering assembly, the hydraulic steering assembly being part of the axle assembly 112. The hydraulic circuit 132 may include a pump 134 and a valve 136. A plurality of arrows 138 may indicate hydraulic connections between components of the hydraulic circuit 132 including the pump 134, the valve 136, and the steering device 150. The pump 134 may be a steering pump 134 and the valve 136 may be a steering valve that may steer the first vehicle via the steering device 150. The valve 136 may be selectively closed or opened to reduce or increase hydraulic pressure to the steering device 150. More specifically, the pump 134 and/or the valve 136 may increase or decrease pressure of work fluid of the steering device 150 to actuate first tie rod assembly 156 and the second tie rod assembly 158 via the steering device 150. In addition to the pump 134 and a valve 136, the steering system may additionally or alternatively include the components and features of a steering system 202 shown in FIG. 2.

The steering device 150 may impose a steering movement and pivot the first steering knuckle 146 and the second steering knuckle 148. More specifically, movement such as steering the first steering knuckle 146 at an angle may be imposed on the second steering knuckle 148 via the steering device 150. The steering device 150 may translate the first tie rod assembly 156 and the second tie rod assembly 158 to steer and pivot the first steering knuckle 146 and the second steering knuckle 148 at angles 160. Angles 160 indicate the angular adjustability of the steerable wheels 114 that may occur in response to operator steering input and the modulation of said input force via a steering system including the steering device 150. Likewise, the steering cylinder is free to move during a maneuver of steering the first steering knuckle 146 or the second steering knuckle 148.

For example, the first hub assembly 142 may rigidly couple to one or more wheels of the set of wheels 114. The first hub assembly 142 may couple to the first axle shaft 118a, such that the first hub assembly 142 may rotate and be driven with the first axle shaft 118a. Likewise, the first steering knuckle 146 may couple to the first hub assembly 142. Alternatively, for another example, the first hub assembly 142 may comprise the first steering knuckle 146. The first tie rod assembly 156 may couple to the first steering knuckle 146, such as to receive rotational loads and other mechanical loads from forces placed on the first hub assembly 142 and the first steering knuckle 146.

For example, the second hub assembly 144 may rigidly couple to one or more wheels of the set of wheels 114. The second hub assembly 144 may couple to the second axle shaft 118b, such that the second hub assembly 144 may rotate and be driven with the second axle shaft 118b. Likewise, the second steering knuckle 148 may couple to the second hub assembly 144. Alternatively, for another example, the second hub assembly 144 may comprise the second steering knuckle 148. The second tie rod assembly 158 may couple to the second steering knuckle 148, such as to receive rotational loads and other mechanical loads from forces placed on the second hub assembly 144 and the second steering knuckle 148.

The first tie rod assembly 156 may include a singular tie rod arm, an inner tie rod arm and outer tie rod arm and/or a plurality of other tie rod arms. Likewise, the second tie rod assembly 158 may be a singular tie rod arm, or an inner tie rod arm, outer tie rod arm, and/or a plurality of other tie rod arms. The first and second tie rod arm assemblies 156, 158 may be upper tie rod assemblies positioned above the rotational axis of the first and second axle shafts 118a, 118b relative to the direction of gravity.

A first joint 166 may pivotally couple the first tie rod assembly 156 to the first steering knuckle 146, allowing translation of the first tie rod assembly 156 to pivot the second steering knuckle 148 about the first joint 166. A second joint 168 may pivotally couple the second tie rod assembly 158 to the second steering knuckle 148, allowing translation of the second tie rod assembly 158 to pivot the second steering knuckle 148 about the second joint 168.

Adjustment of the drivetrain 103 between the various modes as well as control of operations within each mode may be executed based on the vehicle control system 174, including a controller 176. Controller 176 may be a microcomputer, including elements such as a microprocessor unit, input/output ports, an electronic storage medium for executable programs and calibration values, e.g., a read-only memory chip, random access memory, keep alive memory, and a data bus. The storage medium can be programmed with computer readable data representing instructions executable by a processor for performing the methods described below as well as other variants that are anticipated but not specifically listed. In one example, controller 176 may be a powertrain control module (PCM). The controller 176 may include a processor and memory. The memory of controller 176 may hold instructions stored therein that when executed by the processor cause the self-control device to perform the various methods, control techniques, and the like, described herein. The processor of controller 176 may include a microprocessor unit and/or other types of circuits

Controller 176 may receive various signals from sensors 178 coupled to various regions of vehicle 100. For example, the sensors 178 may include sensors at the prime mover 106 or another mover of the vehicle 100 to measure mover speed and mover temperature, a pedal position sensor to detect a depression of an operator-actuated pedal, such as an accelerator pedal or a brake pedal, a lever position sensor to detect a shifting of a lever, such as a brake lever, speed sensors at the wheels 114 to detect the rotational speed of the wheels 114, etc. Upon receiving the signals from the various sensors 178 of FIG. 1, controller 176 processes the received signals, and employs various actuators 180 of vehicle 100 to adjust drivetrain operations based on the received signals and instructions stored on the memory of controller 176. For example, controller 176 may receive an indication or a command signaling a desire for decreased vehicle speed. For another example, controller 176 may receive an indication signaling a desire for increased vehicle speed. In another example, the controller, 176 may receive an indication for a desire of a gear change. For another example, the controller 176 may receive an indication for a desire to turn the wheels 114, the first steering knuckle 146 and the first hub assembly 142, and the second steering knuckle 148 and the second hub assembly 144 at the angles 160. In response to indications, the controller 176 may command operations, such as increasing speed and/or acceleration or decreasing speed and/or acceleration of the vehicle 100; shifting gear modes of the transmission 108; and turning the wheels 114 of the axle assembly 112 via the steering system. For example, the controller 176 may send command signals to one or more of the actuators 180 to decrease or increase pressure to the steering device 150 via the hydraulic circuit 132 to translate the first tie rod assembly 156 and the second tie rod assembly 158, turning the first and second steering knuckles 146, 148 at angles 160.

The vehicle control system 174 may include the autonomous drive system 182. The autonomous drive system 182 may include a self-control device 184. The self-control device 184 may be a computer that allows the vehicle 100 to operate in a self-control mode, where the vehicle 100 may drive along a set path and/or make decisions to drive along and change the path, such as to navigate around obstacles with no input from a human operator. The self-control device 184 may include a processor and memory. The memory may hold instructions stored therein that when executed by the processor cause the self-control device to perform the various methods, control techniques, and the like, described herein. The memory may also hold instructions stored therein that when executed may communicate a command with instructions to the controller 176. The processor may include a microprocessor unit and/or other types of circuits. The memory of the self-control device 184 may include known data storage mediums such as random access memory, read only memory, keep alive memory, combinations thereof, and the like. The memory of the self-control device 184 may include non-transitory memory.

The self-control device 184 may direct the vehicle 100 to drive along a driving path and follow other driving conditions. The driving path and other driving conditions for the vehicle 100 may be pre-programmed into the self-control device 184. The drive path and other driving conditions for the vehicle 100 may be created by the self-control device or adjusted to change the direction of the vehicle, by increasing or decreasing speed and/or acceleration of the vehicle 100 via one or more mover and/or via increasing or decreasing the turning radius of the vehicle 100 via changing the angles 160 via the steering system and axle assembly 112. The self-control device 184 may send data including command signals to the control signals to controller 176, and the controller 176 may send command signals to the actuators 180 to change speed, acceleration, and turn radius for the vehicle 100 to follow the driving path and/or other driving conditions. The self-control device 184 receives input signals from one or more of a plurality of sensors of the sensors 178, in particular from the movers and the axle assembly 112 of the motor vehicle 100, to determine the driving behavior. In particular, the self-control device 184 can act on a mode of operation of controller 176 for controlling one or more components of the vehicle 100. Likewise, the self-control device may send signals to change the behavior of controller 176 so the controller may control one or more components of the vehicle. For example, sensors 178 and, more specifically, one or more of a plurality of spatial sensors 186 may detect an object or obstacle. The detection of the object or obstacle indicates the vehicle 100 and the axle assembly 112 is to turn to avoid being blocked from moving or from experiencing degradation. For example, one or more of the spatial sensors 186 may detect and object and send a signal to the self-control device 184. The self-control device 184 may adjust the drive path of the vehicle 100 to avoid the object. The self-control device 184 may send a command signal as a package with information to adjust the speed and direction of the vehicle 100 to controller 176. Using the command single and information, controller 176 may send one or more other command signals to actuators 180. The actuators 180 may increase or decrease the speed of the vehicle 100 by allowing one or more movers of the vehicle 100, such as the prime mover 106 and/or the electric machine 120, to increase rotational energy, such as torque, to wheels 114. Additionally or alternatively, the actuators 180 may turn the first and second steering knuckles 146, 148, such as via the hydraulic circuit 132 and the steering device 150, increasing or decreasing the angles 160 and the turn radius of the vehicle 100.

FIG. 2 shows an illustration of a trailing system 200 schematically. The trailing system includes the first vehicle 100 and a second vehicle 201 (e.g., a light, medium, or heavy duty vehicle) with a steering system 202 and a motive power source 204. The motive power source 204 may be a prime mover of the second vehicle 201. The motive power source 204 may be an internal combustion engine and/or an electric motor. As such, the steering system 202 may be used in an electric vehicle such as hybrid electric vehicles (HEV) or an all-electric vehicle, in some instances. The internal combustion engine may include conventional components for carrying out combustion operation (e.g., four-stroke combustion cycles) such as an intake system, an exhaust system, a fuel delivery system, an emission control system, and the like, as is known in the art. Further, the electric motor may include conventional components for generating rotational output such as a rotor, a stator, a cooling system, a housing, and the like. The steering system 202 is steered via input from an operator 205. The operator 205 is a human that may drive the vehicle via a plurality of inputs and may steer the vehicle via at least a steering input. For an example, the operator 205 is a human occupant of the second vehicle 201, and the steering input 218 may be a steering wheel. It is to be appreciated that the first vehicle 100 may comprise one or more components of the steering system 202. It is also to be appreciated that components of the steering system of the first vehicle 100 may be the same as the components of the steering system 202. It is also to be appreciated that the steering system 202 may have additional components, such as the components that may be the same as the components of the steering system of the first vehicle 100 (e.g., the steering device 150, first tie rod assembly 156, and the second tie rod assembly 158 of FIG. 1).

The vehicle steering system 202 may include a primary steering pump 206. Further the primary steering pump 206 may be a hydraulic steering pump. As described herein, a pump is a device configured to move fluid and may include vanes, rotors, shafts, pistons, cylinders, chambers, valves, and the like, to accomplish the fluid movement functionality. The primary steering pump 206 may be driven via the motive power source 204. To elaborate, the primary steering pump 206 may be coupled to an output 208 (e.g., a crankshaft in the internal combustion engine embodiment or a rotor shaft in the electric motor embodiment) of the motive power source 204. To elaborate, a front-end accessory drive (FEAD) assembly may rotationally connect the motive power source 204 to the primary steering pump 206. Therefore, in some examples, the FEAD assembly may drive other suitable components such as a water pump, an air conditioning compressor, an alternator, and the like. Further, the primary hydraulic steering pump 206 may be a vane type pump, a roller type pump, a slipper type pump, or a gear type pump.

Arrows 210 indicates the mechanical attachment between the motive power source 204 and a transmission 212. The mechanical attachment may include shafts, belts, chains, a flywheel, a flexplate, combinations thereof, and the like.

Arrow 214 indicates a hydraulic connection between the steering pump 206 and a steering assembly 216. As follows hydraulic lines, conduits, valves, and the like may provide fluidic communication between the primary steering pump 206 and the hydraulic steering assembly. Specifically, in one example, a pressure regulator may be arranged downstream of the primary hydraulic steering pump. A rotary valve in the steering assembly may specifically receive working fluid (e.g., oil) from the primary steering pump 206. However, alternate power steering assembly layouts may be used.

The hydraulic steering assembly 216 may include components such as the rotary valve, a hydraulic piston, rods, gears, and the like. For instance, the steering assembly may be a rack and pinion style steering assembly that exhibits higher efficiency and simplicity than other types of steering systems, although other styles of steering assemblies have been contemplated. The steering assembly functions to deliver and amplify, under some conditions, steering input generated through operator interaction with a steering input 218, or other suitable input device, to steerable wheels 220 in the vehicle. The amplification of the steering force may be adjusted via the steering assembly based on vehicle speed with a greater force amplification occurring during lower vehicle speeds and less force amplification occurring during higher vehicle speeds, for instance. Second angles 219 indicate the angular adjustability of the steerable wheels 220 that may occur in response to operator steering input and the modulation of said input force via the hydraulic steering assembly. In this way, the operator may direct the vehicle according to their predilection.

The second vehicle 201 further includes the transmission 212. A variety of transmission types may be deployed in the vehicle such as a single speed transmission, a multispeed transmission, a manual transmission, an automatic transmission, and the like. Specifically, in one example, the transmission 212 may be a hydromechanical variable transmission due to its higher efficiency relative to other types of transmissions. Nevertheless, other styles of transmissions may be used, in other embodiments.

An auxiliary hydraulic steering pump 222 is coupled to an output 224 of the transmission 212 via a mechanical interface 226. Although, the auxiliary hydraulic steering pump and mechanical interface are schematically depicted in FIG. 1, these components have greater structural complexity that is expanded upon herein with regard to FIGS. 2-4. Further, it will be understood that the output of the transmission may further be rotationally coupled to downstream driveline components such as drive shafts, one or more differentials, axle shafts, drive wheels, and the like.

Arrow 228 indicates the fluidic communication between the auxiliary hydraulic steering pump 222 and the hydraulic steering assembly 216. Hoses, lines, conduits, valves, and the like may be deployed to accomplish the hydraulic connection and other fluid communication between the auxiliary hydraulic steering pump and the hydraulic steering assembly.

The system 202 may optionally include a lubrication pump 230 rotationally coupled to the mechanical interface 226, in yet another example. In such an example, the lubrication pump 230 may be fluidly connected to the transmission 212 via a line 232 and provides lubricant to internal componentry in the transmission.

Further, the vehicle steering system 202 may include a second control system with a second controller. The second controller includes a processor and memory. The memory may hold instructions stored therein that when executed by the processor cause the second controller to perform the various methods, control techniques, and the like, described herein. The processor may include a microprocessor unit and/or other types of circuits. The memory may include known data storage mediums such as random access memory, read only memory, keep alive memory, combinations thereof, and the like. The memory may include non-transitory memory.

The second controller may receive various signals from sensors positioned in different locations of the second vehicle 201 and the steering system 202. The sensors may include an oil pressure sensor 243, an engine or motor speed sensor 244, an ambient temperature sensor 245, a vehicle speed sensor 246, and the like. The second controller may send control signals to various actuators coupled at different locations in the second vehicle 201 and the steering system 202. For instance, the second controller may send signals to a valve in the steering system or to the motive power source 204 to adjust operation thereof. For instance, the second controller may send a command to a valve in the steering system to alter the state of the valve. The other controllable components in the vehicle and steering system may function in a similar manner with regard to command signals and actuator adjustment. The second control system may further include an input device 248. The input device may be a switch, button, touch screen, and the like that allows a vehicle operator 205 to turn on and off operation of the second vehicle 201, including the steering system 202.

The trailing assembly 203 may include a trailer coupling system 264 rigidly coupled to the first vehicle 100 and a tow coupling system 266 rigidly coupled to the second vehicle 201. The trailer coupling system 264 may rigidly couple to axle assembly 112, and, more specifically, a stationary non-driven component of the axle assembly 112. For example, the trailer coupling system 264 may rigidly couple to the axle housing 124 and/or a housing of the differential 116. A third joint 268 may couple the tow coupling system 266 to the trailer coupling system 264, such that the trailer coupling system 264 may be pulled via the tow coupling system 266 and the second vehicle 201.

A third tie rod assembly 262 may be pivotally coupled the first steering knuckle 146, where when translated the third tie rod assembly 262 may press or pull the first steering knuckle 146 such as to pivot the first steering knuckle. The third tie rod assembly 262 may also pivotally couple to the trailer coupling system 264. Said in another way, the third tie rod assembly 262 may be swivelingly or steeringly couple to the trailer coupling assembly. Said in another way, the third tie rod assembly 262 couples to the trailer coupling system 264 and may impose a steering movement to the first vehicle 100 and the axle assembly 112 when the second vehicle 201 is turning. If the trailer coupling system 264 includes a draw bar, the third tie rod assembly 262 couples to the draw bar therein.

A fourth joint 272 and a fifth joint 274 may couple third tie rod assembly 262 to the first steering knuckle 146 and the trailer coupling system 264, respectively, such that the trailer coupling system 264 may impose a steering movement and pivot upon the first steering knuckle 146. The third tie rod assembly 262 may be pivotally coupled to the first steering knuckle 146 via the fourth joint 272, where the third tie rod assembly is pivotable around the fourth joint 272 and may pivot the first steering knuckle 146. Said in another way, the fourth joint 272 may steeringly couple the third tie rod assembly 262 to the first steering knuckle 146, such that the first steering knuckle 146 may pivot when pressed upon by the third tie rod assembly 262. Likewise, the steering cylinder is free to move during a maneuver of steering the first steering knuckle 146 via the trailer coupling system 264 via the third tie rod assembly 262. The third tie rod assembly 262 may be pivotally coupled to the trailer coupling system 264 via the fifth joint 274, where the third tie rod assembly 262 is pivotable around the fifth joint 274 and may be translated and pivoted with the turning of the trailer coupling system 264. Said in another way, the fifth joint 274 may steeringly couple the third tie rod assembly 262 to the first steering knuckle 146, such that third tie rod assembly 262 may pivot when pressed upon or pulled by the trailer coupling system 264.

A set of reference axes 301 are provided for comparison between views shown in FIGS. 3-5. The reference axes 301 indicate a y-axis, an x-axis, and a z-axis. The y-axis may be and be referred to as longitudinal or horizontal. The x-axis may be and be referred to as lateral. The z-axis may be and may be referred to as vertical. In one example, the z-axis may be parallel with a direction of gravity, and the x-y plane may be parallel with a horizontal plane that an axle assembly 302 of FIGS. 3-4 may rest upon. In another example, the x-y plane may be parallel with a horizontal plane that a first steering knuckle 338 of FIG. 5 may rest upon. When referencing direction, positive may refer to in the direction of the arrow of the y-axis, x-axis, and z-axis and negative may refer to in the opposite direction of the arrow of the y-axis, x-axis, and z-axis. A circle may represent an axis of the reference axes 301 that is normal to a view. A circle may represent an axis of the reference axes 301 that is normal to a view. A filled circle may represent an arrow and axis facing toward, or positive to, a view. An unfilled circle may represent an arrow and an axis facing away, or negative to, a view.

Turning to FIG. 3, a first view 300 of the axle assembly 302 is shown. The first view is a perspective view showing features of the axle assembly 302 from different angles. The first view is also a side view. The axle assembly 302 may have a first side 304 and a second side 306, where the first side 304 is opposite the second side 306. Likewise, the axle assembly 302 may have a third side 308 and a fourth side 310, where the third side 308 and the fourth side 310 are opposite to one another.

The axle assembly 302 may be positioned around a first axis 312 and a second axis 316, such that components may be centered radially about each of the axes. The first axis 312 may be a lateral axis and may be parallel with the x-axis. The second axis 316 may be a longitudinal axis for a vehicle housing the axle assembly 302, such as the axis 130 and the vehicle 100, respectively, of FIG. 1, and be parallel with the y-axis. The axle assembly 302 may be an axle system that supports a pair of axle half shafts, receive torque via a differential component, and output torque to a set of wheels that may drive couple to the axle assembly 302. For an example the axle assembly 302 may be the axle assembly 112 of FIGS. 1-2.

The axle assembly 302 may comprise a differential assembly 326. The differential assembly 326 may be or include the differential 116 of FIG. 1. The differential assembly 326 may be positioned around, such as to be approximately centered around, the second axis 316. The differential assembly 326 is sandwiched between the first section and second section of the axle assembly 302. The differential assembly 326 may include a first housing 328. The first section and second section may couple to the differential assembly 326, where the first section extends toward the first side 304 and supports a first wheel end assembly 336a, and the second section extends toward the second side 306 and supports a second wheel that couples to a second wheel end assembly 336b. More specifically, a second housing 332 of the axle assembly 302 and the first section may physically and rigidly couple to the differential assembly 326. Likewise, a third housing 334 of the axle assembly 302 and the second section may physically and rigidly couple to the differential assembly 326. The second housing 332 and the third housing 334 may physically and rigidly couple to opposite sides of the first housing 328. For example, the first housing 328 may include a first flange 362 and a second flange 364, where the first flange 362 is opposite the second flange 364. The second housing 332 may rigidly couple to the first flange 362, and the third housing 334 may rigidly couple to the second flange 364. The differential assembly 326 may be fluidly sealed, preventing fluid housed via the differential assembly from exiting, such as via leaking or flowing. More specifically, when coupled to the first housing 328, the second housing 332 and the third housing 334 may be fluidly sealed with the differential assembly 326 and may prevent or reduce fluid housed therein from leaking therebetween.

The differential assembly 326 may also include a tie rod support 330 and a drive head 340. The first housing 328 may comprise or may rigidly couple to the tie rod support 330. Likewise, the first housing 328 may comprise or may rigidly couple to the drive head 340. The tie rod support 330 may be positioned on and connected to a side of the differential assembly 326 that is opposite to another side of the differential assembly 326 where the drive head 340 is positioned on or connected to. For example, the tie rod support 330 may extend toward the fourth side 310 from the first housing 328, and the drive head 340 may extend toward the third side 308 from the first housing 328. The drive head 340 may be centered radially around the second axis 316. The tie rod support 330 may house a steering device such as one or more steering cylinder(s) 331. The steering cylinder(s) 331 may be rigidly coupled to the differential assembly 326 via the tie rod support 330. Said in another way, the steering cylinder(s) 331 may be mounted to tie rod support 330 and therein mounted to the differential assembly 326. The steering cylinder(s) 331 may be the steering device 150 of FIG. 1.

The differential assembly 326 may include a differential gearset, where the differential gearset may be housed by the first housing 328. Said in another way, the differential gearset of the differential assembly may be enclosed by the first housing 328, and the first housing 328 is therein a differential housing. The differential gearset may be drivingly coupled to a first axle shaft and a second axle shaft of the axle assembly 302. The first axle shaft and the second axle shaft of the axle assembly 302 may be the first axle shaft 118a and the second axle shaft 118b, respectively, of FIG. 1. The first axle shaft may drivingly couple to the first wheel end assembly 336a such as to rotate and transfer rotational energy thereto. The second axle shaft may drivingly couple to the second wheel end assembly 336b such as to rotate and transfer rotational energy thereto. The second housing 332 may house the first axle shaft, and the third housing 334 may house the second axle shaft. The drive head 340 may drivingly couple to the differential gearset of the differential assembly 326, such that rotational energy may be input to drive the gears therein. The differential gearset housed via the differential assembly 326 may distribute unequal rotational energy, such as torque, to rotate the first axle shaft and the second axle shaft, such as during turn of the axle. The differential assembly 326 may therein distribute unequal rotational energy to the first wheel end assembly 336a and the second wheel end assembly 336b.

The axle assembly 302 may be part of a driveline assembly, such as the drivetrain 103 of FIG. 1. The driveline assembly includes sources of power (e.g., one or more movers) that may be transmitted to the axle assembly via rotational elements. A rotational element external to the axle assembly 302 may drivingly couple and output torque to the differential assembly 326 via the drive head 340. The rotational element may be a shaft (e.g., a drive shaft) rigidly coupled to the rotational elements of the drive head 340. The rotational element may be drivingly coupled to one or movers, such as via a transmission, such as the transmission 108 of FIG. 1. Movers may include movers of the first vehicle 100 of FIG. 1, such as the prime mover 106 and/or the electric machine 120 of FIG. 1. For an example, the rotational element may be an output from an electric machine, such as an electric motor, an electric generator, or an electric motor/generator. When drive coupled to the drive head 340, the electric machine may electrify the axle assembly 302 and drive the first and second wheel end assemblies 336a, 336b via the differential assembly 326 the first and second axle shafts. The electric machine may be the prime mover 106 and/or electric machine 120 of FIG. 1.

The drive head 340 may include a third flange 372. A third hole 374 may be concentric to and extend through the drive head 340 from the third flange 372. The rotational element may rigidly couple to the drive head 340 via the third flange 372.

In addition to the second housing 332 and the first axle shaft, the first section of the axle assembly 302 includes the first wheel end assembly 336a and a first steering knuckle 338. Likewise, in addition to the third housing 334 and the second axle shaft, the second section of the axle assembly 302 includes the second wheel end assembly 336b and a second steering knuckle 344. The first steering knuckle 338 may steeringly couple to the first wheel end assembly 336a, such that when pivoted the first steering knuckle 338 steers the first wheel end assembly 336a at approximately a common direction and angle. Likewise, the second steering knuckle 344 may steeringly couple to the second wheel end assembly 336b, such that when pivoted the second steering knuckle 344 steers the second wheel end assembly 336b at approximately a common direction and angle. The first steering knuckle 338, the second steering knuckle 344, the first wheel end assembly 336a, and the second wheel end assembly 336b may be centered around the first axis 312. However, it is to be appreciated, that the first steering knuckle 338, the second steering knuckle 344, the first wheel end assembly 336a, and the second wheel end assembly 336b may be centered around axes pivoted at angles 320 away from the first axis 312. Angles 320 indicate the angular adjustability of the first steering knuckle 338, the second steering knuckle 344, the first wheel end assembly 336a, and the second wheel end assembly 336b from the first axis 312. Angles 320 are represented schematically.

It is to be appreciated, that the positioning of the first steering knuckle 338 and the second steering knuckle 344 may be mirrored (e.g., on opposite sides of the axle assembly 302). For example, the first steering knuckle 338 may alternatively be positioned nearest to the second side 306 and steeringly couple to the second wheel end assembly 336b, and the second steering knuckle may be positioned nearest to the first side 304 and steeringly couple to the first wheel end assembly 336a.

The first wheel end assembly 336a includes a first hub assembly 366a and a first cap 368a. The second wheel end assembly 336b includes a second hub assembly 366b and a second cap 368b. The first hub assembly 366a and the second hub assembly 366b are wheel hub assemblies that may each rigidly couple to one or more wheels. The first cap 368a may rigidly couple to the first hub assembly 366a, and enclose rotational elements of the first hub assembly 366a, such as one or more planetary gearsets. The second cap 368b may rigidly couple the second hub assembly 366b, and enclose rotational elements of the second hub assembly 366b. When coupled, the first hub assembly 366a and the first cap 368a may form a flange that may be a brake flange and/or wheel flange for the first wheel end assembly 336a. Likewise, when coupled, the second hub assembly 366b and the second cap 368b may form another flange that may be a brake flange and/or wheel flange for the first wheel end assembly 336a. Further, the first steering knuckle 338 may steeringly couple to the first hub assembly 366a, and the second steering knuckle 344 may steeringly couple to the second hub assembly 366b.

The first hub assembly 366a may drivingly couple the first shaft of the axle assembly 302, such that the spinning of the first half shaft drives the first hub assembly 366a to spin. The second hub assembly 366b drivingly couple the second shaft of the axle assembly 302, such that the spinning of the first half shaft drives the second hub assembly 366b to spin. The first hub assembly 366a and second hub assembly 366b may be or comprise wheel hubs, where each of the first and second hub assemblies 366a, 366b and their respective wheel hubs may drivingly couple, such as via rigidly couple, to a wheel of a set of wheels. For example, the first and second hub assemblies 366a, 366b may each drivingly couple and/or rigidly couple to a wheel of the wheels 114 of FIG. 1. The first hub assembly 366a may drivingly couple a wheel to the first half shaft. The second hub assembly 366b may drivingly couple a wheel to the second half shaft. The first half shaft and the second half shaft may be centered on the first axis 312, such as to be positioned approximately radially about the first axis 312.

The first steering knuckle 338 and the second steering knuckle 344 are part of a steering assembly for the axle assembly 302 and a larger steering system. The steering assembly of the axle assembly 302 may include the tie rod support 330, the steering cylinder(s) 331, a first tie rod assembly 339, a second tie rod assembly 341, and a third tie rod assembly 343. The second tie rod assembly 341, may be the third tie rod assembly of FIG. 2. The second tie rod assembly 341 and the third tie rod assembly 343 may be the first tie rod assembly 156 and second tie rod assembly of 158 of FIGS. 1-2. The first tie rod assembly 339 and the third tie rod assembly 343 may couple opposite sides of the steering cylinder(s) 331. When coupled to the steering cylinder(s) 331, the first tie rod assembly 339 and the third tie rod assembly 343 are arranged to translate in an outward direction from the steering cylinder(s) 331 via expansion of the steering cylinder(s) 331 and translate in an inward direction toward the steering cylinder(s) 331 via compression of the steering cylinder(s) 331. The first tie rod assembly 339 may pivotally couple to the first steering knuckle 338, such that that the first steering knuckle 338 may pivot at a coupling via pressing or pulling from the first tie rod assembly 339. The second tie rod assembly 341 may pivotally couple to the second steering knuckle 344, such that the first steering knuckle 338 may pivot at a coupling via pressing or pulling from the first tie rod assembly 339. The second tie rod assembly is also connectable and pivotally coupleable to a trailing assembly, such as the trailing assembly 203 of FIG. 1 or a trailing assembly 408 of FIG. 4. The third tie rod assembly 343 may pivotally couple to the second steering knuckle 344, such that that the second steering knuckle 344 may pivot at a coupling via pressing or pulling from the third tie rod assembly.

The first tie rod assembly 339, the second tie rod assembly 341, and/or the third tie rod assembly 343 may each comprise a plurality of tie rod arms. For example, the first tie rod assembly 339 may comprise a first tie rod arm 346 and a second tie rod arm 348 coupled via a first joint 347. The first joint 347 may rigidly couple or, alternatively, pivotally couple the first tie rod arm 346 and the second tie rod arm 348. The first tie rod assembly 339 may include a second joint 352, and second joint 352 may pivotally couple the first tie rod assembly 339 to the first steering knuckle 338. More specifically, the second joint 352 may pivotally couple the first tie rod arm 346 to the first steering knuckle 338. The second tie rod assembly 341 may comprise a third tie rod arm 350. The third tie rod arm 350 may pivotally couple to the steering knuckle via a third joint 354. The third tie rod arm 350 may be coupled via another joint to another tie rod arm. The third tie rod assembly 343 may comprise a fourth tie rod arm 356 and a fifth tie rod arm 358 coupled via a fourth joint 357. The fourth joint 357 may rigidly couple or, alternatively, pivotally couple the fourth tie rod arm 356 and the fifth tie rod arm 358. A fifth joint 360 may pivotally couple the third tie rod assembly 343 to the second steering knuckle 344. More specifically, the fifth joint 360 may pivotally couple the fourth tie rod arm 356 to the second steering knuckle 344. The first tie rod arm 346, the third tie rod arm 350, and the fourth tie rod arm 356 may be the outer tie rod arms of the first tie rod assembly 339, the second tie rod assembly 341, and the third tie rod assembly 343, respectively. Likewise, the second tie rod arm 348 and the fifth tie rod arm 358 may be the outer tie rod arms of the first tie rod assembly 339 and third tie rod assembly 343, respectively. Further, the second joint 352, the third joint 354, and/or the fifth joint 360 may each be a ball joint. Outer with respect to tie rod assemblies may refer to away from or furthest from the second axis 316, and inner with respect to the tie rod assemblies may refer to closer to or closest to the second axis 316.

The first tie rod assembly 339 and the second tie rod assembly 341 may pivotally couple at opposite sides of the first steering knuckle 338. More specifically, the first tie rod assembly 339 and the second tie rod assembly 341 may pivotally couple to a first extension and a second extension of the first steering knuckle 338. There may be at least two extensions from the first steering knuckle 338. The first extension and the second extension may connect to or rigidly couple to opposite sides of the first steering knuckle 338. Likewise, the first extension may be an upper or top extension while the second extension may be a lower or bottom extension, where the first extension is positioned above the second extension relative to the arrangement of the first steering knuckle 338 to the axle assembly 302 and the reference axes 301.

The first and second extensions of the first steering knuckle 338 may be a first arm 376 and a second arm 378, respectively. The first steering knuckle 338 may comprise or rigidly couple to the first arm 376 and/or the second arm 378. The first arm 376 may be a first control arm and a first lever for a tie rod or another component to press upon to turn the first steering knuckle 338. Likewise, the second arm 378 may be a second control arm and a second lever a tie rod or another component to press upon to turn the first steering knuckle 338. The first arm 376 and the second arm 378 may curve outward from the first steering knuckle 338 in opposite direction. The first arm 376 may curve toward the second side 306 and the fourth side 310 from the first steering knuckle 338. The second arm 378 may curve outward toward the first side 304 and the third side 308 from the first steering knuckle 338.

The first tie rod arm 346 or another component of the first tie rod assembly 339 may hingingly couple or pivotally couple to the first arm 376 via the second joint 352, such that the first arm 376 may swivel about the second joint 352. The first tie rod arm 346 or another component of the second tie rod assembly 341 may hingingly couple to the second arm 378 via the third joint 354, such that the second arm 378 may swivel about the third joint 354.

The integration of the first extension and the second extension, such as the first arm 376 and the second arm 378, on opposite sides of the first steering knuckle 338 may eliminate a support rigidly coupled to the first steering knuckle 338 from the axle assembly 302. The support absents from the axle assembly 302, may rigidly couple to the steering knuckle in place of the second arm 378, where the support allows for a tie rod or tie rod assembly pivotally coupled thereto and on the opposite side of the first steering knuckle from the first extension.

The first steering knuckle 338 may also include a plurality of holes and voids, such as a first opening 375. The first opening 375 is an opening to a first cavity of the first steering knuckle 338. The first opening 375 may be irregular in shape or rectangular in shape, with rounded edges curving around the first opening 375. The first opening 375 and the first cavity may be positioned around a portion of the second housing 332. Said in another way the second housing 332 and portions of the axle assembly 302 housed therein, may extend though the first opening 375 and into the first cavity. The dimensions of the first opening 375 and the first cavity are such that the first steering knuckle 338 may pivot around portions of the second housing 332.

The second steering knuckle 344 may include at least an extension extending outward, such as a third arm 380. The third arm 380 may be a first control arm or a first lever of the second steering knuckle 344. The third arm 380 may couple to the fourth tie rod arm 356 or another component of the third tie rod assembly 343 via the second joint 352. More specifically, the first tie rod arm 346 or another component of the third tie rod assembly 343 hingingly couples to the first arm 376 via the second joint 352, such that the first arm 376 may swivel about the second joint 352. The second joint 352 may be a ball joint.

The second steering knuckle 344 may also include a plurality of holes and voids, such as a second opening 379 and a third hole 382. The second opening 379 may be irregular in shape or rectangular in shape, with rounded edges curving around the second opening 379. The third hole 382 may be elliptical in shape, such as circular in shape. The third hole 382 may be centered around a third axis 388, such as radially around the third axis 388. The third axis 388 may be a vertical axis with reference to the reference axes 301. The third hole 382 may also have a cylindrical volume extending through the second steering knuckle 344. The third hole 382 may extend downward, relative to the reference axes 301 and the z-axis, such as when the second steering knuckle 344 is coupled to the axle assembly 302. The second opening 379 is an opening to a second cavity of the second steering knuckle 344. The second opening 379 and the second cavity may be positioned around a portion of the third housing 334. Said in another way the third housing 334 and portions of the axle assembly 302 housed therein, may extend though the second opening 379 and into the second cavity. The dimensions of the second opening 379 and the second cavity are such that the second steering knuckle 344 may pivot freely around portions of the third housing 334.

The third hole 382 may be a fit for housing a king pin of the second steering knuckle 344. Said in another way, a king pin may be extended through and supported via the third hole 382 and the walls and surfaces of the second steering knuckle 344 around the third hole 382. The second steering knuckle 344 may be arranged pivot around the king pin, such as when a force is applied to the third arm 380.

A fourth flange 384 may extend outward from the third hole 382, such as radially outward, with respect to the third axis 388. The fourth flange 384 may host a plurality of fourth holes 386. The fourth holes 386 extend inward through material of the second steering knuckle 344 from the fourth flange 384, more specifically the fourth holes 386 may be arranged to extend downward from the fourth flange 384. The fourth holes 386 may be arranged radially or partially radially around the third hole 382. The kingpin housed via the third hole 382 may be secured and fixed to prevent being removed from the third hole 382, via a plurality of fasteners extending through the fourth flange 384 and the fourth holes 386.

It is to be appreciated, the first steering knuckle 338 may have another hole and another flange, that may be symmetric with the third hole 382 and the fourth flange 384 respectively. Said in another way, the other hole and the other flange may have approximately the same dimensions as the third hole 382 and the fourth flange 384. The other hole and the other flange of the first steering knuckle 338 that may house a kingpin may be covered via a first component 392. The other hole may house a portion of a first component 392. Likewise, the other flange may contact and/or couple to the first component 392, where contact includes surface sharing contact. The first component 392 may couple to a second component 394. The other hole of the first steering knuckle 338 has a similar in function to the third hole 382: housing a king pin for the first steering knuckle 338, where the first steering knuckle 338 may pivot around the kingpin fit to and housed via the other hole therein. The other hole may be a second hole 514 of FIG. 5.

A plurality of fasteners 396 may extend through a flange of the first component 392 coupling the first component 392 and by extension a king pin, to the first steering knuckle 338. The fasteners 396 may be king pin screws to secure a king pin fit to a hole extending through the first steering knuckle.

Turning to FIG. 4, a second view 400 of the axle assembly 302 and a trailing assembly 408 is shown. The second view 400 is a perspective view showing features of the axle assembly 302 and the trailing assembly 408 from different angles. The second view 400 is also a side view.

The trailing assembly 408 may couple a first vehicle and a second vehicle, such that the second vehicle may tow first vehicle. The trailing assembly 408, may be the trailing assembly 203 of FIG. 2. The trailing assembly 408 may include a trailer coupling system 412 and a tow coupling system 414. The trailer coupling system 412 and the tow coupling system 414 may be the trailer coupling system 264 and the tow coupling system 266 of FIG. 2, respectively.

The trailer coupling system 412 and the tow coupling system 414 may be coupled via a sixth joint 426. More specifically, the sixth joint 426 may steeringly couple the trailer coupling system 412 to the tow coupling system 414, such that the trailer coupling system 412 may turn with the tow coupling system 414. The tow coupling system 414 may include a latch 428 that pivotally couples the tow coupling system 414 to the sixth joint 426. Likewise, the trailer coupling system 412 may include a draw bar 422. The draw bar 422 may pivotally couple the trailer coupling system 412 to the sixth joint 426.

The tow coupling system 414 may include a tow bar 424. The tow bar 424 may rigidly couple the tow coupling system 414 to a component or feature of the second vehicle.

The trailer coupling system 412 may also include a mounting system that may rigidly couple components of the trailer coupling system 412, such as the draw bar 422, to the axle assembly 302. For an example, the mounting system of the trailer coupling system 412 may include first truss 432 with a first mount 436 and a second truss 434 with a second mount 438. The first truss 432 may pivotally couple and mount the draw bar to the second housing 332 via the first mount 436. The first mount 436 may rigidly couple to the second housing 332, the first truss 432 may comprise or rigidly couple to the first mount 436, and the draw bar 422 may rigidly couple to the first truss 432. The second truss 434 may rigidly couple and mount the draw bar to the third housing 334 via the second mount 438. The second mount 438 may rigidly couple to the third housing 334, the second truss 434 may comprise or rigidly couple to the second mount 438, and the draw bar 422 may rigidly couple to the second truss 434. The draw bar 422 may couple to the first trust and the second truss via a fastener 439. The fastener 439 may be a bolt. The first truss 432 and the second truss 434 may provide mechanical support to the trailer coupling system 412 and, more specifically, the draw bar 422. Mechanical support may include increased tensile, compressive, and sheer strength. The first truss 432 and the second truss 434 may position and connect the trailer coupling system 412 below the axle assembly 302 relative to the reference axes 301.

The trailer coupling system 412 and, more specifically, the draw bar 422 may couple with and be part of the steering system and the steering assembly of the axle assembly 302. The second tie rod assembly 341 may pivotally couple to the draw bar 422. More specifically, the second tie rod assembly 341 may include a sixth tie rod arm 440, and the sixth tie rod arm 440 may pivotally couple to the draw bar 422 via the a seventh joint 442. The sixth tie rod arm 440 may pivotally couple or rigidly couple to the third tie rod arm 350 via an eighth joint 444.

Using FIG. 1 and/or FIGS. 3-4, a method may be described for turning wheels and/or wheel hubs of an axle assembly of the present disclosure via a steering assembly of the present disclosure. The first vehicle of the method may be the first vehicle 100 of FIGS. 1-2. Likewise, the second vehicle of the method may be the second vehicle 201 of FIG. 2.

The axle assembly of the method may be the axle assembly 112 of FIGS. 1-2 and/or the axle assembly 302 of FIGS. 3-4. The steering knuckle of the method may be the first steering knuckle 146 of FIGS. 1-2 and/or the first steering knuckle 338 of FIG. 3-4. The trailing assembly of the method may be the first trailing assembly 203 of FIG. 2 or the trailing assembly 408 of FIG. 4; and, therein the trailer coupling system may be the trailer coupling system 264 of FIG. 2 and/or the trailer coupling system 412; and, likewise the tow coupling system may be the tow coupling system 266 of FIG. 2 and/or the tow coupling system 414 of FIG. 4. The first tie rod assembly of the method may be the third tie rod assembly 262 of FIG. 2 or the second tie rod assembly 341 of FIG. 3-4. The second tie rod assembly may be the first tie rod assembly 156 of FIGS. 1-2 or the first tie rod assembly 339 of FIG. 3. The third tie rod assembly may be the second tie rod assembly 158 of FIGS. 1-2 or the third tie rod assembly 343 of FIG. 3. The first steering knuckle of the method may be the first steering knuckle 338 of FIG. 3. The second steering knuckle of the method may be the second steering knuckle 344 of FIG. 3.

The method may begin by driving the second vehicle in a first direction. The second vehicle is a human operated vehicle. The second vehicle is coupled to the first vehicle via the trailing assembly.

The method continues by steering the second vehicle, in a second direction from the first direction. The second direction is at an angle from the first direction. Steering the second vehicle steers one or more of a plurality wheels and wheel hubs of the second vehicle at common angles, such as the second angles 219 of FIG. 2.

The method continues, via turning a tow coupling system via turning the second vehicle. The trailing assembly comprises the tow coupling system, and the tow coupling system is coupled to the second vehicle, such as via rigidly coupled.

The method continues, via turning the trailer coupling system of the trailing assembly via turning the tow coupling system and applying a first force therefrom. Turning the trailing assembly may include turning a draw bar with the tow coupling system, and applying the first force from the tow coupling system. The tow coupling system may push or pull on the trailer coupling system and the components therein, via the first force, therein turning the trailer coupling system. For example, the tow coupling system may push or pull on a draw bar pivotally coupled to the tow coupling system via a joint.

The method continues by applying the first force from the turning of the trailer coupling system to shift a first tie rod assembly in a third direction, where the first tie rod assembly couples to the trailer coupling system. Shifting and pivoting the first tie rod assembly, may include applying the first force from the turning of the draw bar, where the turning of the draw bar shifts the first tie rod assembly in the third direction. The first tie rod assembly couples the draw bar, and more specifically pivotally couples the draw bar via a first joint. The first joint may be the seventh joint 442 of FIG. 4.

The method continues via pivoting a first steering knuckle to turn in the third direction via shifting the first tie rod assembly, and further pivoting a first lever of the first steering knuckle. The pivoting of the first tie rod assembly pivots the first lever and by extension the first steering knuckle. The first tie rod assembly presses or pulls first lever and the steering knuckle, pivoting the first steering knuckle around a king pin. The first lever couples the first tie rod assembly via a second joint. The first lever may be the second arm 378 of FIGS. 3-4. The second joint may be the third joint 354 of FIG. 3.

The method continues by pivoting a first wheel hub assembly with the first steering knuckle in the third direction, where the first wheel hub assembly couples to the first steering knuckle. The third direction may be at an angle from a central axis, such as the angles 320 from the first axis 312 of FIG. 3, the shafts of the axle are centered around.

The method continues by pivoting and translating a second tie rod assembly via a second lever of the first steering knuckle in the third direction, where the second lever is coupling the second tie rod assembly. The second lever may be the first arm 376 of FIGS. 3-4. The second tie rod assembly may couple the second lever via a third joint, such as the second joint 352 of FIGS. 3-4.

The method continues pivoting and translating a third tie rod assembly in the third direction via the second tie rod assembly and a steering cylinder. The steering cylinder is translated and pivoted while coupling the second tie rod assembly and the third tie rod assembly.

The method continues by pivoting a second steering knuckle in the third direction via pivoting and translating the third tie rod assembly. The third tie rod assembly couples a third lever of the second steering knuckle. The second wheel hub assembly pivots with as the second steering knuckle in the third direction, as the second wheel hub assembly couples to the second steering knuckle.

The method continues after turning the first and the second wheel hubs in the third direction, by turning the first vehicle in the second direction. During the turn, the pivoting of the first wheel hub assembly and the second wheel hub assembly may continue, pivoting and turning the first wheel hub assembly and the second wheel hub, such that the first vehicle is turning in the second direction with the first vehicle.

It is to be appreciated that the turning of the first steering knuckle and by extension the first wheel hub via the first tie rod assembly, the pulling or pushing of the second tie rod assembly via the first steering knuckle, the translation of one or more components the steering cylinder and the third tie rod assembly connected thereto, and the second steering knuckle with the second wheel hub via the third tie rod assembly may be accomplished in a single maneuver and grander composite step of the method. Said in another way, the turning of the first steering knuckle and by extension the first wheel hub via the first tie rod assembly, the pulling or pushing of the second tie rod assembly via the first steering knuckle, the translation of one or more components the steering cylinder and the third tie rod assembly connected thereto, and the second steering knuckle with the second wheel hub via the third tie rod assembly may be completed approximately simultaneously.

After the wheel hubs turn and the first vehicle turns in the direction of the second vehicle, the method ends.

In this way, an axle system is steerable via tie rods or tie rod assemblies pivotally coupled to a first extension and a second extension integrated with and on opposite sides of a steering knuckle of the present disclosure. Likewise, the steering knuckle of the present disclosure may be steered and pivoted via a first tie rod or tie rod assembly and/or a second tie rod or tie rod assembly pivotally coupled to opposite sides of the steering rod. Further, the steering knuckle and the axle system is steerable via a trailing assembly that may towingly couple a first vehicle and a second vehicle towing the first vehicle, where the first vehicle comprises the axle system and the steering knuckle. Via the method, the second vehicle may steer the axle system via the trailing assembly, the steering knuckle pivotally coupled to the trailing assembly via a draw bar, and another steering knuckle coupled to the steering knuckle via the steering system. Via the method and the steering knuckle of the present disclosure, the steering knuckle of the present disclosure may be pivoted while eliminating a support from the axle system that rigidly couples to the steering knuckle and pivotally coupled to the draw bar or another component of the trailing assembly during steering.

Turning to FIG. 5, a third view 500 of the first steering knuckle 338. The third view 500 is a perspective view showing features of the axle assembly 302 and the trailing assembly 408 from different angles. The third view 500 is also a side view, showing a first side 502 of the first steering knuckle 338 of FIG. 3. The first steering knuckle 338 has a second side 504 opposite to the first side 502. Said in another way, the first side 502 and the second side 504 are opposite sides of the first steering knuckle 338. The first side 502 may face a wheel hub assembly, such as the first hub assembly 366a of FIG. 3, and therein may be referred to as a wheel side. The second side 504 may face housing, such as the second housing 332 and other components of the axle assembly 302 of FIG. 3, such as axle shafts. Said in another way the second side 504 may face the axle of the axle assembly 302, and therein may be referred to additionally and alternatively as an axle side of the first steering knuckle 338. The first arm 376 and the second arm 378 are located between the first side 502 and the second side 504. The first arm 376 may extend outward in a first direction and curve outward further in a third direction. The first side 502 faces the third direction. The second arm 378 may extend outward in a first direction and curve outward in a fourth direction. The second side 504 faces the fourth direction. The first direction may be represented by a first arrow 515; the second direction may be represented by a second arrow 516; the third direction may be represented by a third arrow 517; and, the fourth direction may be represented by a fourth arrow 518. The third arrow 517 and the fourth arrow 518 may be parallel with the first axis 312.

In addition to the first arm 376 and the second arm 378, the first steering knuckle 338 comprises a core 506. The core 506 may be arranged around a fourth axis 507 and a fifth axis 508. More specifically, a first hole 510 and a second hole 514 may be centered, such as radially around, the fourth axis 507 and the fifth axis 508, respectively. For an example, the fourth axis 507 may be coaxial with the first axis 312 of FIGS. 3-4. For another example, the fourth axis 507 may be offset from the first axis 312 at an angle, such as at one of the angles 320 of FIG. 3. The first hole 510 may be arranged to face outward from the first side 502 of the steering knuckle 338. The second hole 514 may be arranged at the top and face outward from the top of the first steering knuckle 338, where top is an upper side of the first steering knuckle 338 with reference to the reference axes 301. The fifth axis 508 may be vertical with reference to the reference axes 301. The core 506 may comprise a plurality of rounded edges and shapes arranged around and connected to flatter faces, such as flanges. The flatter faces may extend outward from the first hole 510 and the second hole 514. The first hole 510 and/or the second hole 514 may be cylindrical in shape and volume. The first hole 510 may extend toward and be volumetrically connected to other volumes of the first steering knuckle 338, such as the cavity and the first opening 375 of FIG. 3. Likewise, the second hole 514 may extend toward and volumetrically connected to other volumes of the first steering knuckle 338, such as the cavity and the first opening 375. The second hole 514 may extend and depress into the first steering knuckle 338, such as downward. Additionally or alternatively, the second hole 514 may be a through hole extending through the core 506. Alternatively, the second hole 514 may be volumetrically connected and be aligned with another hole, where the second hole 514 and the another hole are centered around the fifth axis 508.

The second hole 514 may be a fit for housing a kingpin via the first steering knuckle 338. Said in another way, a kingpin may be extended through and supported via the second hole 514 and the walls and surfaces of the first steering knuckle 338 around the second hole 514. The first steering knuckle 338 may be arranged pivot around the kingpin, such as when a force is applied to the first arm 376 or the second arm 378. The second hole 514 may be symmetrical with the third hole 382 of FIG. 3.

The first hole 510 may be a fit for housing and supporting an axle support system 512. Said in another way, the axle support system 512 may be housed via and extend from the first hole 510. The axle support system 512 may extend in the third direction from the first hole 510 and the first side 502. The axle support system 512 may be part of a wheel side assembly and, more specifically, a hub assembly, such as the first wheel end assembly 336a and the first hub assembly 366a of FIG. 3. The axle support system 512 may be housed in part and be covered via a cap, such as a first cap 368a of FIG. 3.

The axle support system 512 may include at least a bearing assembly 524. The axle support system 512 may be a spindle system that includes a spindle component. Additionally, the axle support system 512 may include a shield 522 and a seal 523. Further the axle support system 512 may include a wear sleeve. The axle support system 512 may be arranged couple to and extend from the first side 502 of the first steering knuckle 338. The shield may be arranged radially around the seal 523, and may be arranged radially around the bearing assembly 524. Said in another way, the seal 523 may be sandwiched between the shield 522 and the bearing assembly 524. The seal 523 may be an oil seal or another fluid seal that creates a fluid tight seal between surfaces of the shield 522 and the bearing assembly 524. The bearing assembly 524 includes at least a bearing or a set of bearings. However, it is to be appreciated that the bearing assembly may include a plurality of bearings or a plurality of sets of bearings. The bearing assembly 524 may include a bearing assembly 524. The bearing assembly 524 supports an axle shaft of the axle assembly 302 of FIGS. 3-4.

A third hole 520 may extend through the axle support system 512. The third hole 520 may be concentric to the axle support system 512. The axle support system 512 may be arranged such that the third hole 520 may be positioned radially around the fourth axis 507. The third hole 520 may be approximately cylindrical in shape and volume. A shaft or a rotational element, such as a stub shaft, may be housed via and fit to the third hole 520. The shaft or rotational element housed via the third hole 520 may rigidly couple to one or more components of a wheel end assembly, such as the first wheel end assembly 336a of FIG. 3. More specifically, the shaft or rotational element housed via and fit to the third hole 520 may rigidly couple to one or more components a wheel hub and/or a wheel hub assembly, such as the first hub assembly 366a.

The bearing assembly 524 includes one or more bearings, such as ball bearings. Further the bearing assembly 524 may comprise an inner track and/or race 528, and an outer track and/or race 530 to hold a plurality of bearing elements. The bearing elements may be ball bearing elements. A plate 532 may be arranged to physically and rigidly couple the bearing assembly 524 and prevent bearing elements from exiting the bearing assembly 524. The plate 532 may have a plurality of fourth holes 534.

A flange 544 may be located around and extend in an outward direction from, such as a radially outward direction, from the second hole 514. The flange 544 may host a plurality of fifth holes 546. The fifth holes 546 extend inward through material of the first steering knuckle 338 from the flange 544, more specifically the fifth holes 546 may be arranged to extend downward from the flange 544. The fifth holes 546 may be arranged radially or partially radially around the second hole 514. A plurality of fasteners, such as the fasteners 396 of FIG. 3, may mount the first component 392 to the flange 544 via the fifth holes 546. More specifically, the fasteners may extend through the first component 392 and the fifth holes 546 and fasten therein, such as via meshing of threading of the fasteners and or the fifth holes 546 and or first component 392. The kingpin housed via the second hole 514 may be secured and fixed to prevent or reduce removal from the second hole 514 via the fasteners, the fifth holes 546 and the first component 392. It is to be appreciated, that the flange 544 and the fifth holes 546 may be symmetrical to the fourth flange 384 and the fourth holes 386 of FIG. 3.

Extending outward from the core are a first feature 552 and a second feature 554. The first feature 552 includes a sixth hole 556 and the second feature 554 includes a seventh hole 558. The first and second features 552, 554 may be blocky, having a shape and volume of rectangular prism, with a plurality of flat surfaces and straight edges. The first and second features 552, 554 may be connected to the core 506. For an example the core 506 may comprise or join to the first and second features 552, 554. The first feature 552 connects to and may mechanically support the first arm 376, providing increase tensile strength, compressive strength, sheer strength, and other support to the first arm 376. Likewise, the second feature 554 connects to and may mechanically support the second arm 378, providing increase tensile strength, compressive strength, sheer strength, and other support to the second arm 378. The first arm 376 may be above the first feature 552, and the second arm 378 may be below the second feature 554. The sixth and seventh holes 556, 558 may have centerlines parallel to the fourth axis 507.

The first steering knuckle 338 may include a first rib 548 that connects the first arm 376 and the core 506, the first rib 548 providing mechanical support therein. The first steering knuckle 338 may also include a second rib 550 that connects the second arm 378 and the core 506, the second rib providing mechanical support therein. The first rib 548 and the second rib 550 may extend from the core 506 in an outward direction to connect and fuse with the first arm 376 and the second arm 378, respectively. The first rib 548 may fuse with a first surface of the first arm 376. The second rib 550 may fuse with a second surface 551 of the second arm 378. The first surface 549 may be an upper surface (top surface), positioned to face in an upward direction with respect to the reference axes 301 and relative to the axle assembly 302. Likewise, the second surface 551 may be a lower surface (bottom surface), positioned to face in a downward direction with respect to the reference axes 301 and relative to the axle assembly 302. In particular, the first rib 548 and surfaces thereof may be contiguous with the surface of the flange 544. Forces, such as tensile forces, compressive force, and sheering forces, placed on the first arm 376 may be a distributed via the first rib 548 to the core 506. Said in another way, the first rib 548 may provide additional tensile strength, compressive strength, and sheer strength to the first arm 376. Further, force, such as tensile forces, compressive force, and sheering forces, placed on the second arm 378 may be a distributed via the second rib 550 to the core 506. Said in another way, the second rib 550 may provide additional tensile strength, compressive strength, and sheer strength to the second arm 378.

The first arm 376 may be a compound shape comprising plurality of shapes both regular and irregular. For example, the first arm 376 may be rounded and curved such as to include rounded and curved surfaces. As an arm, the first arm 376 may include a first beam, where the first beam may have rounded edges and is defined in shape by both flat surfaces and rounded surfaces. The first beam extends out toward a first distal end 560 of the first arm 376. The first distal end 560 may be curved, having at least a surface that curves around the first arm 376. The beam and the first distal end 560 may curve outward with the first arm 376 toward the third direction.

The first arm 376 includes the first surface 549, a third surface 564, a fourth surface 566, and a fifth surface 568. The third surface 564, the fourth surface 566 may define the shape of the second beam. The first surface 549 may be irregular in shape. The first surface 549 has an incline with a sloping ridge. The first surface 549 is continuous with the surfaces of the first rib 548. A first recess 562 of the first arm 376 shapes a curved depression from the first surface 549. A sixth surface 570 may be formed from the first recess 562. The sixth surface 570 may be flat and may be normal to a vertical axis, such as the fifth axis 508. The eighth hole 584 may extend through the first arm 376 from the sixth surface 570. A centerline of the eighth hole 584 may be vertical and parallel with the fifth axis 508. The third surface 564 and the fourth surface 566 may be rounded surfaces continuous with and connected to the first surface 549. Likewise, the third surface 564, the fourth surface 566, and the fifth surface 568 may be connected to and contiguous with the sixth surface 570. The third surface 564 may be a first rounded surface and fourth surface 566 may be a second rounded surface for the first arm 376. The third surface 564 may be opposite the fourth surface 566 from the first surface 549 and the sixth surface 570. The third surface 564 may curve with a curvature of a first radius 592. The fourth surface 566 may have a portion that extends approximately tangentially from the core 506. The third surface 564 and the fourth surface 566 may curve about the first arm 376, and connect to and be continuous with the fourth surface 566. The third surface 564 may curve outward from the core 506 with the first radius 592. The fourth surface 566 may curve outward from the core 506 to the fifth surface 568. The third surface 564 and the fourth surface 566 may be connected to and continuous with the fifth surface 568. The fifth surface 568 may curve around the first distal end 560. The fifth surface 568 curve in an elliptical way, such as in a circular way, giving the first distal end 560 a partially cylindrical shape. The fifth surface 568 may be connected to and contiguous with the sixth surface 570.

A joint, such as the second joint 352 of FIGS. 3-4, may couple to the first arm 376 within the perimeter of the first recess 562. More specifically, a portion of the joint, such as a bearing component, may be inserted into, extend through, and fitted to the eighth hole 584. A portion of the joint, such as a head, may rest against and/or abut and be supported via the sixth surface 570. The shape of the first recess allows the first arm 376 to pivot around the joint while preventing or reducing contact between the joint and the core 506, the first rib 548, the first feature 552, and other surfaces of the first arm 376, such as the first surface 549.

The second arm 378 includes the second surface 551, a seventh surface 571, an eighth surface 576, a ninth surface 578, and a tenth surface 580. The seventh surface 571, the eighth surface 576, the ninth surface 578, and the tenth surface 580 may define the shape of the second beam. The second surface 551 and the seventh surface 571 may be on opposite sides of the second arm 378. The second surface 551 may be continuous with the surfaces of the second rib 550. A second recess 574 of the second arm 378 shapes a curved depression from the seventh surface 571. An eleventh surface 582 may be formed from the second recess 574. The eleventh surface 582 may be flat and may be normal to a vertical axis, such as the fifth axis 508. The ninth hole 586 may extend through the second arm 378 from the eleventh surface 582. A centerline of the ninth hole 586 may be vertical and parallel with the fifth axis 508. The eighth surface 576 and the ninth surface 578 may be rounded surfaces continuous with and connected to the second surface 551 and the seventh surface 571. Likewise, the seventh surface 571, the eighth surface 576, the ninth surface 578, and the tenth surface 580 may be connected to and contiguous with the eleventh surface 582. The eighth surface 576 may be a first rounded surface and ninth surface 578 may be a second rounded surface for the second arm 378. The eighth surface 576 may be opposite the ninth surface 578 from the second surface 551, the seventh surface 571, and the tenth surface 580. The eighth surface 576 may curve with a curvature of a second radius 594. The ninth surface 578 may have a portion that extends approximately tangentially from the core 506. The eighth surface 576, the ninth surface 578, and the tenth surface 580 may curve about the second arm 378. The ninth surface 578 may curve outward from the core 506 with the first radius 592. The ninth surface 578 may curve outward from the core 506 to the tenth surface 580 in the fourth direction. The eighth surface 576 and the ninth surface 578 may be connected to and continuous with the tenth surface 580. The tenth surface 580 may curve around the second distal end 572. The tenth surface 580 curve in an elliptical way, such as in a circular way, giving the second distal end 572 a partially cylindrical shape.

A joint, such as the second joint 352 of FIGS. 3-4, may couple to the first arm 376 within the perimeter of the second recess 574. More specifically, a portion of joint, such as a bearing component, may be inserted into, extend through, and fitted to the ninth hole 586. A portion of the joint, such as a head, may rest against and/or abut and be supported via the eleventh surface 582. The shape of the second recess 574 allows the second arm 378 to pivot around the joint while preventing or reducing contact between the joint and the core 506, the second rib 550, the second feature 554, and other surfaces of the second arm 378, such as seventh surface 571.

In this way, a steering knuckle has a first extension and a second extension integrated therein and extend from opposite sides of the steering knuckle to serve as control features for tie rods or tie rod assemblies to couple thereto. Further, the steering knuckle is steerable via a steering system and/or a trailing assembly pivotally coupled to the first extension and second extension, respectively, via tie rods and/or tie rod assemblies. The first extension and the second extension are each arms that are mechanically supported by a plurality of features connected to a core of the steering knuckle. The integration of the first extension and the second extension with eliminates a support that may be coupled to the steering knuckle, where the support may be a control feature used in place of either the first extension or second extension for a tie rod or tie rod assembly to pivotally couple thereto.

Turning to FIG. 6, it shows a method 600 of assembling a steering knuckle of the present disclosure to an axle assembly. The steering knuckle of method 600 may be the first steering knuckle 338 of FIGS. 3 and 5, where a first arm of method 600 may be the first arm 376 of FIGS. 3-5, a second arm of method 600 may be the second arm 378 of FIGS. 3 and 5. Likewise an axle support system and wheel hub input hole may be the axle support system 512 and the first hole 510 of FIG. 5. A kingpin hole, a flange, and fastener holes of the steering knuckle, may be the second hole 514, the flange 544, and the fifth holes 546 of FIG. 5, respectively. A wheel hub may be a component of a wheel side assembly and a wheel hub assembly, such as the first wheel end assembly 336a and first hub assembly 366a of FIGS. 3-4. Further, a trailing assembly 408, a trailer coupling system, and a tow coupling system of method 600 may be the trailing assembly 408, the trailer coupling system 412, and the tow coupling system 414 of FIG. 4. More specifically, a tow bar of method 600 may be the tow bar 424 of FIG. 4. Likewise, the axle assembly may be the axle assembly 302 of FIG. 3 and/or the axle assembly 112 of FIG. 1 and components therein. More specifically other components and features of the axle assembly described via the method 600 may be components and features described above in FIGS. 3-5, where an axle housing may be the second axle housing of FIGS. 3-4, a first tie rod arm may be the first tie rod arm 346 of FIGS. 3-4, a second tie rod may be the second tie rod arm 348 of FIGS. 3-4, a third tie rod arm may be the third tie rod arm 350 of FIGS. 3-4, a fourth tie rod arm may be the sixth tie rod arm 440 of FIG. 4, a first joint may be the second joint 352 of FIGS. 3-4, the second joint may be the third joint 354 of FIGS. 3-4, the third joint may be the first joint 347 of FIGS. 3-4, the fourth joint may be the seventh joint 442 of FIG. 4, and the fifth joint may be the eighth joint 444 of FIG. 4.

Method 600 begins at 602, coupling the axle support system to the steering knuckle. The axle support system may be inserted and rigidly coupled to the steering knuckle via the wheel hub input hole.

At 606, method 600 continues by inserting and fitting and input from the steering knuckle to the wheel side assembly into a hole of the axle support system. The hole may be the second hole 514 of FIG. 5. When fit, the input may be supported via the one or more bearings of the axle support system. The input may be a rotational element, such as a stub shaft.

Method 600 may continue with an optional step at 608, coupling the input to an axle shaft of the axle assembly. The axle shaft may be a driven axle shaft, driven via a source of rotational power, such as the first axle shaft 118a or the second axle shaft 118b of FIG. 1. The input may be coupled via a joint, such as ball joint, allowing the swiveling and spinning of the input when coupled to the axle shaft. For this arrangement the input may be driven via the axle shaft.

At 612, method 600 continues arranging the steering knuckle around the axle housing. After ranging the steering knuckle, the method 600 continues to 614, inserting, fitting, and coupling the kingpin to the steering knuckle and the axle assembly. The kingpin may be inserted via advancing the kingpin through the kingpin hole concentric to an axis. The kingpin is extended through the steering knuckle via the kingpin hole to fit to the steering knuckle. The kingpin may be extended through one or more other components of the axle assembly, such as the axle housing. When fit through and to the axle assembly and the other components of the axle assembly, the king pin may pivotally couple the steering knuckle to the other components of the axle assembly. The kingpin may be coupled, and more specifically mounted, to the steering knuckle via fasting. The kingpin may be fastened via a plurality of fasteners, such as the fasteners 396 of FIG. 3, where the fasteners extend through holes in a mount for the kingpin and other holes of the steering knuckle. The other holes may be the fifth holes 546 of FIG. 5.

At 616, method 600 continues via optionally assembling tie rod assemblies including a first and a second tie rod assembly. 616 of method 600 is completed if one or more tie rod assemblies for the axle assembly comprises a plurality of tie rod arms, including at least an inner tie rod arm and an outer tie rod arm. The tie rod assemblies include a first tie rod assembly that couples to the first arm of the steering knuckle and a second tie rod assembly that couples to the second arm of the steering knuckle, where the first arm is an upper arm and lever and the second arm is a lower arm and lever. The tie rod arm assemblies are assembled via coupling the tie rod arms therein via one or more of a plurality of joints. Coupling via the joints may pivotable couple each tie rod or tie rod piece coupled therein. For example, the first tie rod assembly may have an outer tie rod and an inner tie rod that are the first tie rod arm and the second tie rod arm, respectively. The first tie rod assembly is assembled, via coupling first tie rod arm to the second tie rod arm via the third joint. For another example, the second tie rod assembly has an outer tie rod and an inner tie rod that are the third tie rod arm and the fourth tie rod arm, respectively. The second tie rod assembly is assembled, via coupling third tie rod arm to the fourth tie rod arm via the fourth joint. For other examples there may be one or more tie rod arms between the inner and outer tie rod arms of the tie rod assemblies each coupled via a joint. If the first tie rod assembly comprises a singular tie rod, method 600 may skip 616.

Method 600 continues to 618, coupling the first tie rod assembly to a steering cylinder. The coupling is completed by coupling and inserting second tie rod arm into the steering cylinder. When coupled, the first tie rod assembly is arranged to translate and expand away from or compress toward the steering cylinder. The steering cylinder may be mounted to a component of the vehicle housing the axle assembly. The steering cylinder may be housed and mounted to a tie rod support, such as tie rod support 330 of FIGS. 3-4.

Method 600 continues to 620, coupling the first tie rod assembly to the first arm of the steering knuckle via a joint. More specifically, at 618, the method 600 continues by coupling the first tie rod arm to the first arm of the steering knuckle via the first joint. The first joint is arranged at the end of the first tie rod and/or the first tie rod assembly opposite to an end coupled to the steering cylinder. The first joint is inserted into a hole of the first arm, such as the eighth hole 584 of FIG. 5. After securing the first joint to the first arm, such as via a fastener, first joint the pivotally couples the first arm and the first tie rod assembly.

Method 600 continues to 622, coupling the second tie rod assembly to the second arm via a joint. More specifically, at 622, the method 600 continues by coupling the third tie rod arm to the second arm of the steering knuckle via the second joint. The second joint is arranged at the end of the third tie rod and/or the second tie rod assembly opposite to an end may couple to the trailing assembly. The second joint is inserted into a hole of the second arm, such as the ninth hole 586 of FIG. 5. After securing the second joint, such as via a fastener, the second joint pivotally couples the second arm and the second tie rod assembly.

At 624, the method 600 continues by coupling the second tie rod assembly to the trailing assembly. The second tie rod assembly is coupled by coupling an inner tie rod arm of the second tie rod assembly, such as the fourth tie rod arm, via the fourth joint. More specifically, method 600 couples the fourth tie rod arm to the draw bar. For example, the second joint is inserted into a hole of the draw bar. The fourth joint is then secured to the draw bar, such as via fasteners, therein pivotally coupling the draw bar and the second tie rod assembly. For another example, the fourth joint is inserted into another hole of another component of the trailing assembly.

After being secured to the other component, the fourth joint pivotally couples the other component of the trailing assembly and the second tie rod assembly. The fourth joint is then secured to the draw bar, such as via fasteners, therein pivotally coupling the draw bar and the second tie rod assembly. For another example, the fourth joint is inserted into another hole of another component of the trailing assembly. After being secured to the other component, the fourth joint pivotally couples the other component of the trailing assembly and the second tie rod assembly.

In this way, an axle system is assemblable, where the axle assembly incudes a steering knuckle a first extension and a second extension integrated therein and serve as control features for tie rods or tie rod assemblies to couple thereto. The first extension and the second extension are on opposite sides of the steering knuckle, therein allowing a first tie rod or tie rod assembly to pivotally couple the steering knuckle to a steering cylinder and allowing a second tie rod or tie rod assembly to pivotally couple the steering knuckle to a trailer system on opposite sides of the axle. The trailer system includes a draw bar the second tie rod or tie rod assembly may pivotally couple thereto. The axle system, may enable the steering knuckle to be steered via the first tie rod/tie rod assembly and steering system comprising the steering cylinder, and/or the second tie rod/tie rod assembly and the trailer coupling system. More specifically, the integration of the first extension and the second extension, eliminates assembling a support to the steering knuckle, where the support rigidly couples the steering knuckle and incorporates an extension for at least one tie rod or tie rod assembly may pivotally couple thereto.

While various embodiments have been described above, it should be understood that they have been presented by way of example, and not limitation. It will be apparent to persons skilled in the relevant arts that the disclosed subject matter may be embodied in other specific forms without departing from the spirit of the subject matter. The embodiments described above are therefore to be considered in all respects as illustrative, not restrictive. As such, the configurations and routines disclosed herein are exemplary in nature, and that these specific examples are not to be considered in a limiting sense, because numerous variations are possible. For example, the above technology can be applied to powertrains that include different types of propulsion sources including different types of prime movers, internal combustion engines, and/or transmissions. The subject matter of the present disclosure includes all novel and non-obvious combinations and sub-combinations of the various systems and configurations, and other features, functions, and/or properties disclosed herein.

Note that the example control and estimation routines included herein can be used with various engine, electric machine, transmission, and/or vehicle system configurations. The control methods and routines disclosed herein may be stored as executable instructions in non-transitory memory and may be carried out by the control system including the controller in combination with the various sensors, actuators, and other engine hardware. The specific routines described herein may represent one or more of any number of processing strategies such as event-driven, interrupt-driven, multi-tasking, multi-threading, and the like. As such, various actions, operations, and/or functions illustrated may be performed in the sequence illustrated, in parallel, or in some cases omitted. Likewise, the order of processing is not necessarily required to achieve the features and advantages of the example embodiments described herein, but is provided for ease of illustration and description. One or more of the illustrated actions, operations, and/or functions may be repeatedly performed depending on the particular strategy being used. Further, the described actions, operations, and/or functions may graphically represent code to be programmed into non-transitory memory of the computer readable storage medium in the engine control system, where the described actions are carried out by executing the instructions in a system including the various engine hardware components in combination with the electronic controller.

It will be appreciated that the configurations and routines disclosed herein are exemplary in nature, and that these specific embodiments are not to be considered in a limiting sense, because numerous variations are possible. Moreover, unless explicitly stated to the contrary, the terms "first," "second," "third," and the like are not intended to denote any order, position, quantity, or importance, but rather are used merely as labels to distinguish one element from another. The subject matter of the present disclosure includes all novel and non-obvious combinations and sub-combinations of the various systems and configurations, and other features, functions, and/or properties disclosed herein.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. An axle assembly (112) for a vehicle comprising:
a steering cylinder;
a housing (124);
a steering knuckle (146, 148), the steering knuckle (146, 148) having a first extension and a second extension;
a first tie rod assembly (156) connectable to the steering cylinder and pivotally coupled to the first extension; and
a second tie rod assembly (158) connectable to a draw bar (422) of the vehicle and pivotally coupled to the second extension.

2. The axle assembly (112) of claim 1, where the first extension is a first arm and the second extension is a second arm.

3. The axle assembly (112) of any one of the preceding claims, where the first extension is arranged above the second extension relative to a flat surface.

4. The axle assembly (112) of any one of the preceding claims, where the first extension is arranged to connect to a first side of a wheel side of the steering knuckle (146, 148), and the second extension is arranged to connect to a second side of the steering knuckle (146, 148), where the second side is opposite the first side.

5. The axle assembly (112) of any one of the preceding claims, where the steering knuckle (146, 148) comprises a hole (382) via which a kingpin may be housed and fit, the hole (382) extending through a core of the steering knuckle (146, 148) positioned between the first extension and the second extension.

6. The axle assembly (112) of any one of the preceding claims, where the steering cylinder is housed and supported via a tie rod support integrated in the housing (124).

7. The axle assembly (112) of any one of the preceding claims, where the steering knuckle (146, 148) comprises an opening and a cavity, the opening and the cavity are positioned around the housing (124), such that the steering knuckle (146, 148) is pivotable around the housing (124).

8. The axle assembly (112) of any one of the preceding claims, where the first tie rod assembly (156) comprises a first tie rod arm and a second tie rod arm rigidly coupled via a first joint, the first tie rod arm being an outer tie rod arm and the second tie rod arm being an inner tie rod arm, the first tie rod arm is pivotally coupled to the first extension and the second tie rod arm is connected to the steering cylinder.

9. The axle assembly (112) of any one of the preceding claims, where the second tie rod assembly (158) comprises a first tie rod arm and a second tie rod arm rigidly coupled via a first joint, the first tie rod arm being an outer tie rod arm and an inner tie rod arm, the first tie rod arm is pivotally coupled to the second extension and the second tie rod arm is pivotally coupleable to the draw bar (422).

10. The axle assembly (112) of any one of the preceding claims, where the axle assembly (112) is rigidly coupleable to a trailer coupling system, the trailer coupling system including the draw bar (422).

11. The axle assembly (112) of any one of the preceding claims, where the steering knuckle (146, 148) comprises a hole, and a support system for a wheel hub assembly, and an input to the wheel hub assembly, where wheel hub assembly and the input are housed and coupled to the steering knuckle (146, 148) via the hole.

12. A vehicle comprising the axle assembly (112) of any one of the preceding claims, further comprising:
a trailing assembly, wherein the second tie rod assembly (158) is pivotably coupled to the trailing assembly.

13. The vehicle of claim 12, where the vehicle is an autonomous vehicle capable of moving and navigating through an environment while lacking input from a human operator.

14. The vehicle of claim 12 or 13, where the trailing assembly is coupleable to a second vehicle, such that the vehicle is towable and steerable via the second vehicle, where the second tie rod assembly (158) is pivotable via movement of the second vehicle through the trailing assembly.

15. The vehicle of claim 12, where the trailing assembly includes the draw bar (422).
